(19)

Europäisches
Patentamt
European
Patent Office
Office européen
des brevets

(11) **EP 4 748 884 A1**

(12) **EUROPEAN PATENT APPLICATION**
published in accordance with Art. 153(4) EPC

(43) Date of publication:
**27.05.2026 Bulletin 2026/22**

(21) Application number: **24874937.6**

(22) Date of filing: **02.10.2024**

(51) International Patent Classification (IPC):
*C08L 25/12* (2006.01)      *C08L 51/04* (2006.01)
*C08L 67/02* (2006.01)      *C08L 23/08* (2025.01)

(52) Cooperative Patent Classification (CPC):
**C08L 23/08; C08L 25/12; C08L 51/04; C08L 67/02**

(86) International application number:
**PCT/KR2024/014947**

(87) International publication number:
**WO 2025/075381 (10.04.2025 Gazette 2025/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 06.10.2023  KR 20230133757
06.10.2023  KR 20230133758
30.09.2024  KR 20240133295
30.09.2024  KR 20240133298

(71) Applicant: **LG Chem, Ltd.**
**Seoul 07336 (KR)**

(72) Inventors:
• **KIM, Seyong**
**Seoul 07796 (KR)**

• **AHN, Bong Keun**
**Seoul 07796 (KR)**
• **KIM, Min Jung**
**Seoul 07796 (KR)**
• **HWANG, Yong Yeon**
**Seoul 07796 (KR)**
• **PARK, Jangwon**
**Seoul 07796 (KR)**
• **LEE, Eunji**
**Seoul 07796 (KR)**
• **YEOM, Gyeongdong**
**Seoul 07796 (KR)**

(74) Representative: **Plasseraud IP**
**104 Rue de Richelieu
CS92104
75080 Paris Cedex 02 (FR)**

(54) **THERMOPLASTIC RESIN COMPOSITION, METHOD FOR PREPARING SAME, AND MOLDED ARTICLE INCLUDING SAME**

(57) The present invention relates to a thermoplastic resin composition, a method of preparing the same, and a molded article including the same. More particularly, the present invention relates to a thermoplastic resin composition prepared by adding a compatibilizer to a base resin including an ASA-based graft copolymer, an SAN-based and/or SAMMA-based resin, and a recycled or non-recycled polyalkylene terephthalate and adjusting the composition ratio thereof, a method of preparing the thermoplastic resin composition, and a molded article including the thermoplastic resin composition. According to the present invention, the intrinsic mechanical properties of each of the ASA-based resin and the polyester resin may be maintained at a certain level or higher, and film processability, gloss, whiteness, weather resistance, and thermal stability may be excellent. In addition, even when including a recycled resin, impact resistance, film processability, low-gloss characteristics, weather resistance, and thermal stability may be excellent.

**Description**

[Technical Field]

[Cross-Reference to Related Applications]

This application claims priority to Korean Patent Application No. 10-2023-0133757, filed on October 06, 2023, and Korean Patent Application No. 10-2023-0133758, filed on October 06, 2023, and Korean Patent Application No. 10-2024-0133295, re-filed on September 30, 2024, and Korean Patent Application No. 10-2024-0133298, re-filed on September 30, 2024, based on the priority of the above patents, respectively, in the Korean Intellectual Property Office, the disclosures of each of which are incorporated herein by reference.

The present invention relates to a thermoplastic resin composition, a method of preparing the same, and a molded article including the same. More particularly, the present invention relates to a thermoplastic resin composition having excellent mechanical properties, film processability, appearance such as gloss and whiteness, weather resistance, and thermal stability, and moreover, being environmentally friendly by preventing the deterioration of physical properties even when including a recycled resin, and having excellent mechanical properties, film processability, low-gloss characteristics, weather resistance, and thermal stability, a method of preparing the thermoplastic resin composition, and a molded article including the thermoplastic resin composition.

[Background Art]

ABS resins, represented by acrylonitrile-butadienestyrene resins, have been used in various fields due to excellent molding processability, mechanical properties, and appearance thereof. However, since ABS resin is a resin based on conjugated diene rubber with chemically unstable unsaturated bonds, the ABS resin has poor weather resistance, such as easy aging when exposed to ultraviolet rays. Accordingly, ASA-based resin, represented by an acrylate compound-styrene-acrylonitrile copolymer, has been proposed as a material that can replace ABS-based resin.

ASA-based resins have excellent weather resistance, thermal stability, aging resistance, and chemical resistance, as well as molding processability, rigidity, and impact resistance, and are widely used in various fields regardless of indoor/outdoor use, such as electrical and electronic components, construction materials, automobile interior and exterior materials, ships, and leisure goods.

The ASA-based resin is based on acrylate rubber and provides impact resistance to the product, and is mainly used mixed with hard resin. A representative example of hard resin is acrylonitrile resin.

In addition, polyester resins, such as polyethylene terephthalate resin and polybutylene terephthalate resin, have excellent mechanical and electrical properties and other physical and chemical characteristics and are widely used in automobile parts, electrical and electronic devices, and office equipment. In particular, the utilization of polyester resins is increasing in the automotive parts field where highly intensive technological developments such as electric vehicles and autonomous driving technology are taking place along with the recent trend of lightweight materials.

Blending ASA-based resin and polyester resin is expected to provide a very useful material, but in reality, the ASA-based resin and the polyester resin are not compatible with each other, so there is a problem that the physical properties that are expressed are lower than expected.

In addition, while plastics are consumed in significant quantities in modern society due to the convenience thereof, plastics do not decompose naturally, and so there is a growing demand for methods to treat and utilize waste plastics, and the use of recycled resin is becoming mandatory as part of environmental regulations. However, recycled resin ages due to physical/chemical factors such as impact, wear, heat, UV, moisture, and exposure to high and low temperature environments during the manufacturing, consumption, and disposal processes. In addition, compared to newly polymerized virgin resin, recycled resin has problems such as significantly lower molding processability, mechanical rigidity, appearance quality, flexibility, chemical resistance, and thermal stability due to contamination with foreign substances.

Therefore, there is a need to develop a thermoplastic resin composition that expresses the expected physical properties due to excellent compatibility while including ASA-based resin and polyester resin and has physical properties at a level applicable to existing plastic materials even when including a certain level of recycled resin.

[Related Art Documents]

[Patent Documents]

KR 10-2009-0038507 A

[Disclosure]

[Technical Problem]

Therefore, the present invention has been made in view of the above problems, and it is one object of the present invention to provide a thermoplastic resin composition being capable of maintaining the intrinsic mechanical properties of each of an ASA-based resin and a polyester resin at a certain level or higher, having excellent film processability, gloss, whiteness, weather resistance, and thermal stability, and moreover, being environmentally friendly by preventing the deterioration of physical properties even when including a recycled resin, and having excellent film processability, low-gloss characteristics, weather resistance, and thermal stability, a method of preparing the thermoplastic resin composition, and a molded article manufactured using the thermoplastic resin composition.

The above and other objects can be accomplished by the present invention described below.

[Technical Solution]

I) In accordance with one aspect of the present invention, provided is a thermoplastic resin composition including 100 parts by weight of a base resin including 60 to 90 % by weight of a styrene-based copolymer and 10 to 40 % by weight of a recycled or non-recycled polyalkylene terephthalate, and 0.5 to 10 parts by weight of a compatibilizer.

II) In accordance with another aspect of the present invention, provided is a thermoplastic resin composition including 100 parts by weight of a base resin including 15 to 50 % by weight of a copolymer including an alkyl acrylate rubber, an aromatic vinyl compound, and a vinyl cyanide compound, 20 to 55 % by weight of an aromatic vinyl compound-vinyl cyanide compound copolymer, and 10 to 40 % by weight of a recycled or non-recycled polyalkylene terephthalate, and 0.5 to 10 parts by weight of a compatibilizer.

III) In accordance with still another aspect of the present invention, provided is a thermoplastic resin composition including 100 parts by weight of a base resin including 15 to 50 % by weight of a copolymer including an alkyl acrylate rubber, an aromatic vinyl compound, and a vinyl cyanide compound, 20 to 55 % by weight of an aromatic vinyl compound-vinyl cyanide compound copolymer, and 10 to 40 % by weight of a recycled or non-recycled polyalkylene terephthalate, and 0.5 to 10 parts by weight of a compatibilizer, wherein a weight ratio of the copolymer including an alkyl acrylate rubber, an aromatic vinyl compound, and a vinyl cyanide compound to the recycled or non-recycled polyalkylene terephthalate is 0.5 to 2.0 : 1.

IV) In accordance with still another aspect of the present invention, provided is a thermoplastic resin composition including 100 parts by weight of a base resin including 15 to 50 % by weight of an alkyl acrylate-aromatic vinyl compound-vinyl cyanide compound graft copolymer (A), 20 to 55 % by weight of an aromatic vinyl compound-vinyl cyanide compound copolymer (B), and 10 to 40 % by weight of a recycled or non-recycled polyalkylene terephthalate (C), and 0.5 to 10 parts by weight of a compatibilizer (D).

V) According to I) to IV), the compatibilizer (D) may preferably include one or more selected from the group consisting of an ethylene-methyl acrylate copolymer (EMA), an ethylene-butyl acrylate copolymer (EBA), an ethylenevinyl acetate copolymer (EVA), an ethylene-methyl acrylate-glycidyl methacrylate copolymer (EMA-GMA), and an ethylene-butyl acrylate-glycidyl methacrylate copolymer (EBA-GMA).

VI) According to I) to V), based on 100 % by weight of the base resin, the copolymer (A) may preferably include 3 to 35 % by weight of an alkyl acrylate-aromatic vinyl compound-vinyl cyanide compound graft copolymer (A-1) containing an alkyl acrylate rubber having an average particle diameter of 250 to 500 nm and 5 to 40 % by weight of an alkyl acrylate-aromatic vinyl compound-vinyl cyanide compound graft copolymer (A-2) containing an alkyl acrylate rubber having an average particle diameter of 50 to 150 nm.

VII) According to I) to VI), based on a total weight thereof, each of the graft copolymer (A-1) and the graft copolymer (A-2) may preferably include 40 to 60 % by weight of an alkyl acrylate rubber, 30 to 40 % by weight of an aromatic vinyl compound, and 10 to 20 % by weight of a vinyl cyanide compound.

VIII) According to I) to VII), the copolymer (B) may preferably include one or more selected from the group consisting of an aromatic vinyl compound-vinyl cyanide compound copolymer (B-1) including 55 to 85 % by weight of an alkyl non-substituted aromatic vinyl compound and 15 to 45 % by weight of a vinyl cyanide compound and a heat-resistant aromatic vinyl compound-vinyl cyanide compound copolymer (B-2) including 60 to 80 % by weight of an alkylsubstituted aromatic vinyl compound, 20 to 40 % by weight of a vinyl cyanide compound, and 0 to 20 % by weight of an alkyl non-substituted aromatic vinyl compound.

IX) According to I) to VIII), the aromatic vinyl compound-vinyl cyanide compound copolymer (B-1) may preferably have a weight average molecular weight of 50,000 to 300,000 g/mol.

X) According to I) to IX), the heat-resistant aromatic vinyl compound-vinyl cyanide compound copolymer (B-2) may preferably have a weight average molecular weight of 30,000 to 200,000 g/mol.

XI) According to I) to X), the polyalkylene terephthalate (C) may preferably have an intrinsic viscosity (I.V.) of 0.5 to 1.5 dl/g.

XII) According to I) to XI), the polyalkylene terephthalate (C) may be preferably non-recycled polyethylene terephthalate or recycled polyethylene terephthalate.

XIII) According to I) to XII), a weight ratio (A:C) of the graft copolymer (A) to the polyalkylene terephthalate (C) may be preferably 0.5 to 2.0 : 1.

XIV) According to I) to XIII), the compatibilizer (D) may preferably include 30 to 90 % by weight of ethylene and 10 to 70 % by weight of methyl acrylate or vinyl acetate, more preferably 50 to 90 % by weight of ethylene and 10 to 50 % by weight of methyl acrylate or vinyl acetate. More preferably, the compatibilizer (D) may be an ethylene-methyl acrylate copolymer (EMA) including 50 to 90 % by weight of ethylene and 10 to 50 % by weight of methyl acrylate.

XV) According to I) to XIV), the polyalkylene terephthalate (C) may be preferably non-recycled polyethylene terephthalate, and the thermoplastic resin composition may preferably have an injection gloss of 108 or more as measured at 45° for an injection-molded specimen having a thickness of 3 mm according to ASTM D2457.

XVI) According to I) to XV), the polyalkylene terephthalate (C) may be preferably recycled polyethylene terephthalate, and the thermoplastic resin composition may preferably have a gloss of less than 50 as measured at 45° for an extruded film specimen having a thickness of 0.08 mm (80 μm) according to ASTM D2457.

XVII) In accordance with still another aspect of the present invention, provided is a method of preparing a thermoplastic resin composition, the method including kneading and extruding, at 170 to 300 °C and 100 to 400 rpm, 100 parts by weight of a base resin including 60 to 90 % by weight of a styrene-based copolymer and 10 to 40 % by weight of a recycled or non-recycled polyalkylene terephthalate and 0.5 to 10 parts by weight of a compatibilizer (D).

XVIII) In accordance with still another aspect of the present invention, provided is a method of preparing a thermoplastic resin composition, the method including kneading and extruding, at 170 to 300 °C and 100 to 400 rpm, 100 parts by weight of a base resin including 15 to 50 % by weight of a copolymer including an alkyl acrylate rubber, an aromatic vinyl compound, and a vinyl cyanide compound, 20 to 55 % by weight of an aromatic vinyl compound-vinyl cyanide compound copolymer, and 10 to 40 % by weight of a recycled or non-recycled polyalkylene terephthalate and 0.5 to 10 parts by weight of a compatibilizer (D).

XIX) In accordance with still another aspect of the present invention, provided is a method of preparing a thermoplastic resin composition, the method including kneading and extruding, at 170 to 300 °C and 100 to 400 rpm, 100 parts by weight of a base resin including 15 to 50 % by weight of a copolymer including an alkyl acrylate rubber, an aromatic vinyl compound, and a vinyl cyanide compound, 20 to 55 % by weight of an aromatic vinyl compound-vinyl cyanide compound copolymer, and 10 to 40 % by weight of a recycled or non-recycled polyalkylene terephthalate and 0.5 to 10 parts by weight of a compatibilizer (D), wherein a weight ratio of the copolymer including an alkyl acrylate rubber, an aromatic vinyl compound, and a vinyl cyanide compound to the recycled or non-recycled polyalkylene terephthalate is 0.5 to 2.0 : 1.

XX) In accordance with still another aspect of the present invention, provided is a method of preparing a thermoplastic resin composition, the method including kneading and extruding, at 170 to 300 °C and 100 to 400 rpm, 100 parts by weight of a base resin including 15 to 50 % by weight of an alkyl acrylate-aromatic vinyl compound-vinyl cyanide compound graft copolymer (A), 20 to 55 % by weight of an aromatic vinyl compound-vinyl cyanide compound copolymer (B), and 10 to 40 % by weight of a recycled or non-recycled polyalkylene terephthalate (C) and 0.5 to 10 parts by weight of a compatibilizer (D).

XXI) In accordance with yet another aspect of the present invention, provided is a molded article including the thermoplastic resin composition according to any one of I) to XX) .

[Advantageous Effects]

According to the present invention, the present invention has an effect of providing a thermoplastic resin composition being capable of maintaining the intrinsic mechanical properties of each of an ASA-based resin and a polyester resin at a certain level or higher and having excellent film processability, injection gloss, whiteness, weather resistance, and thermal stability, a method of preparing the thermoplastic resin composition, and a molded article manufactured using the thermoplastic resin composition.

In addition, the present invention has an effect of providing a thermoplastic resin composition being environmentally friendly by preventing the deterioration of physical properties even when a recycled resin is included, being capable of maintaining the intrinsic mechanical properties of each of an ASA-based resin and a polyester resin at a certain level or higher, and having excellent film processability, low-gloss characteristics, weather resistance, and thermal stability, a method of preparing the thermoplastic resin composition, and a molded article manufactured using the thermoplastic resin composition.

[Best Mode]

Hereinafter, a thermoplastic resin composition of the present invention, a method of preparing the same, and a molded article including the same are described in detail.

The present inventors confirmed that, when alloying an ASA-based resin and a polyester resin, a compatibilizer was added, and the composition ratio thereof was controlled within a predetermined range, excellent film processability, weather resistance, and thermal stability were implemented without the deterioration of the intrinsic mechanical properties of each of an ASA-based resin and a polyester resin. In particular, even when a recycled resin was mixed, the deterioration of physical properties was prevented, thereby achieving eco-friendliness. Based on these results, the present inventors conducted further studies to complete the present invention.

The thermoplastic resin composition of the present invention includes 100 parts by weight of a base resin including 60 to 90 % by weight of a styrene-based copolymer and 10 to 40 % by weight of a polyalkylene terephthalate and 0.5 to 10 parts by weight of a compatibilizer, and the polyalkylene terephthalate is a recycled or non-recycled polyalkylene terephthalate. In this case, compatibility may be greatly improved, thereby maintaining the intrinsic mechanical properties of an ASA-based resin and a polyester resin at a certain level or higher. In addition, film processability, gloss, whiteness, weather resistance, and thermal stability may be excellent. In addition, even when a recycled resin is included, the deterioration of physical properties may be prevented, thereby achieving eco-friendliness. In addition, film processability and low-gloss characteristics may be excellent.

In the present disclosure, the styrene-based copolymer means a copolymer containing a styrene-based monomer represented by styrene, i.e., an aromatic vinyl compound as a main component in an amount of preferably 5 % by weight or more, as a specific example, a copolymer including an alkyl acrylate rubber, an aromatic vinyl compound, and a vinyl cyanide compound and/or an aromatic vinyl compound-vinyl cyanide compound copolymer. In addition, the copolymer including an alkyl acrylate rubber, an aromatic vinyl compound, and a vinyl cyanide compound may be a graft copolymer obtained by grafting an aromatic vinyl compound-vinyl cyanide compound copolymer onto an alkyl acrylate rubber core.

In addition, specifically, the thermoplastic resin composition of the present invention includes 100 parts by weight of a base resin including 15 to 50 % by weight of a copolymer including an alkyl acrylate rubber, an aromatic vinyl compound, and a vinyl cyanide compound, 20 to 55 % by weight of an aromatic vinyl compound-vinyl cyanide compound copolymer, and 10 to 40 % by weight of a polyalkylene terephthalate and 0.5 to 10 parts by weight of a compatibilizer, and the polyalkylene terephthalate is a recycled or non-recycled polyalkylene terephthalate. In this case, compatibility may be greatly improved, thereby maintaining the intrinsic mechanical properties of an ASA-based resin and a polyester resin at a certain level or higher. In addition, film processability, gloss, whiteness, weather resistance, and thermal stability may be excellent. In addition, even when a recycled resin is included, the deterioration of physical properties may be prevented, thereby achieving eco-friendliness. In addition, film processability and low-gloss characteristics may be excellent.

In addition, specifically, the thermoplastic resin composition of the present invention includes 100 parts by weight of a base resin including 15 to 50 % by weight of a copolymer including an alkyl acrylate rubber, an aromatic vinyl compound, and a vinyl cyanide compound, 20 to 55 % by weight of an aromatic vinyl compound-vinyl cyanide compound copolymer, and 10 to 40 % by weight of a polyalkylene terephthalate and 0.5 to 10 parts by weight of a compatibilizer. The weight ratio of the copolymer including an alkyl acrylate rubber, an aromatic vinyl compound, and a vinyl cyanide compound to the polyalkylene terephthalate is 0.5 to 2.0 : 1, and the polyalkylene terephthalate is a recycled polyalkylene terephthalate or non-recycled polyalkylene terephthalate. In this case, compatibility may be greatly improved, thereby maintaining the intrinsic mechanical properties of an ASA-based resin and a polyester resin at a certain level or higher. In addition, film processability, gloss, whiteness, weather resistance, and thermal stability may be excellent. In addition, even when a recycled resin is included, the deterioration of physical properties may be prevented, thereby achieving eco-friendliness. In addition, film processability and low-gloss characteristics may be excellent.

In addition, more specifically, the thermoplastic resin composition of the present invention includes 100 parts by weight of a base resin including 15 to 50 % by weight of an alkyl acrylate-aromatic vinyl compound-vinyl cyanide compound graft copolymer, 20 to 55 % by weight of an aromatic vinyl compound-vinyl cyanide compound copolymer, and 10 to 40 % by weight of a polyalkylene terephthalate and 0.5 to 10 parts by weight of a compatibilizer, and the polyalkylene terephthalate is a recycled or non-recycled polyalkylene terephthalate. In this case, compatibility may be greatly improved, thereby maintaining the intrinsic mechanical properties of an ASA-based resin and a polyester resin at a certain level or higher. In addition, film processability, gloss, whiteness, weather resistance, and thermal stability may be excellent. In addition, even when a recycled resin is included, the deterioration of physical properties may be prevented, thereby achieving eco-friendliness. In addition, film processability and low-gloss characteristics may be excellent.

In the present disclosure, the component ratio of a copolymer or resin may refer to the content of a unit constituting the copolymer, or may refer to the content of a monomer added during polymerization of the copolymer.

In the present disclosure, a polymer including a certain compound means a polymer prepared by polymerizing the compound, and a unit in the polymer is derived from the compound.

In the present disclosure, when a recycled thermoplastic resin conforms to the definition of the present invention and is recognized as a conventional recycled thermoplastic resin in the art to which the present invention pertains, the recycled thermoplastic resin may be used in the present invention without particular limitation. For example, the recycled thermoplastic resin is a thermoplastic resin recycled from collected waste plastics. As a specific example, the recycled thermoplastic resin refers to a raw material obtained by sorting, washing, and crushing collected waste plastics. In addition, when necessary, the recycled thermoplastic resin may be processed into pellets through an extrusion process. In this case, no additional processing such as additional purification is required.

In the present disclosure, a non-recycled thermoplastic resin contrasts with the recycled thermoplastic resin above described, may also be called virgin or fresh thermoplastic resin, and may be prepared by polymerizing monomers constituting a thermoplastic resin or a commercially available product corresponding thereto.

In the present disclosure, resins not designated as recycled or non-recycled (fresh) may be either recycled or non-recycled resins, but preferably non-recycled resins.

Hereinafter, each component of the thermoplastic resin composition of the present invention will be described in detail.

(A) Alkyl acrylate-aromatic vinyl compound-vinyl cyanide compound graft copolymer

Based on 100 % by weight of the base resin (A+B+C) including (A) to (C), the alkyl acrylate-aromatic vinyl compound-vinyl cyanide compound graft copolymer (A) (hereinafter referred to as 'graft copolymer (A)') may be included in an amount of 15 to 50 % by weight, preferably 17 to 48 % by weight, more preferably 18 to 46 % by weight, still more preferably 19 to 45 % by weight, still more preferably 20 to 45 % by weight. Within this range, impact resistance, film processability, gloss, whiteness, weather resistance, and thermal stability may be excellent. In addition, even when a recycled resin is included, the deterioration of physical properties may be prevented, thereby achieving eco-friendliness. In addition, impact resistance, film processability, low-gloss characteristics, weather resistance, and thermal stability may be excellent.

The graft copolymer (A) may preferably include an alkyl acrylate rubber (core) and an aromatic vinyl compound-vinyl cyanide compound copolymer (shell) surrounding the core.

For example, the graft copolymer (A) may be a mixture of two or more graft copolymers containing alkyl acrylate rubber cores having different particle diameters, and may be, specifically, a mixture of an alkyl acrylate-aromatic vinyl compound-vinyl cyanide compound graft copolymer (A-1) containing an alkyl acrylate rubber having an average particle diameter of 250 to 500 nm and an alkyl acrylate-aromatic vinyl compound-vinyl cyanide compound graft copolymer (A-2) containing an alkyl acrylate rubber having an average particle diameter of 50 to 150 nm. In this case, film processability, impact resistance, weather resistance, and whiteness may be excellent. In addition, when a recycled resin is included, low-gloss characteristics, film processability, and impact resistance may be excellent.

More specifically, for example, based on 100 % by weight of the base resin, the graft copolymer (A) may include 3 to 35 % by weight of the graft copolymer (A-1) and 5 to 40 % by weight of the graft copolymer (A-2), preferably 3 to 33 % by weight of the graft copolymer (A-1) and 5 to 38 % by weight of the graft copolymer (A-2), more preferably 4 to 32 % by weight of the graft copolymer (A-1) and 5 to 37 % by weight of the graft copolymer (A-2), still more preferably 5 to 30 % by weight of the graft copolymer (A-1) and 5 to 36 % by weight of the graft copolymer (A-2), still more preferably 5 to 27 % by weight of the graft copolymer (A-1) and 6 to 35 % by weight of the graft copolymer (A-2). In this case, impact resistance, film processability, gloss, whiteness, weather resistance, and thermal stability may be excellent. In addition, even when including a recycled resin, the deterioration of physical properties may be prevented, thereby achieving eco-friendliness. In addition, low-gloss characteristics may be excellent.

For example, when the thermoplastic resin composition does not contain a recycled resin, based on 100 % by weight of the base resin, the graft copolymer (A) may include 3 to 20 % by weight of the graft copolymer (A-1) and 5 to 40 % by weight of the graft copolymer (A-2), preferably 3 to 19 % by weight of the graft copolymer (A-1) and 5 to 38 % by weight of the graft copolymer (A-2), more preferably 3 to 18 % by weight of the graft copolymer (A-1) and 5 to 37 % by weight of the graft copolymer (A-2), still more preferably 4 to 18 % by weight of the graft copolymer (A-1) and 5 to 36 % by weight of the graft copolymer (A-2), still more preferably 4 to 17 % by weight of the graft copolymer (A-1) and 6 to 35 % by weight of the graft copolymer (A-2). In this case, impact resistance, weather resistance, and whiteness may be excellent without degradation of other physical properties.

For example, when the thermoplastic resin composition includes a recycled resin, preferably a recycled polyalkylene terephthalate, based on 100 % by weight of the base resin, the graft copolymer (A) may include 10 to 35 % by weight of the graft copolymer (A-1) and 5 to 20 % by weight of the graft copolymer (A-2), preferably 10 to 32 % by weight of the graft copolymer (A-1) and 5 to 19 % by weight of the graft copolymer (A-2), more preferably 11 to 30 % by weight of the graft copolymer (A-1) and 5 to 18 % by weight of the graft copolymer (A-2), still more preferably 12 to 28 % by weight of the graft copolymer (A-1) and 5 to 18 % by weight of the graft copolymer (A-2), still more preferably 12 to 25 % by weight of the graft copolymer (A-1) and 5 to 17 % by weight of the graft copolymer (A-2). In this case, low-gloss characteristics and impact resistance may be excellent without degradation of other physical properties.

For example, the weight ratio (A-1:A-2) of the graft copolymer (A-1) to the graft copolymer (A-2) may be 0.1 to 3.0 : 1, as a specific example, 0.5 to 3.0 : 1, preferably 0.8 to 2.8 : 1, more preferably 1.0 to 2.6 : 1, still more preferably 1.0 to 2.5 : 1, still more preferably 1.1 to 2.5 : 1. Within this range, the intended effects may be fully realized. In particular, even when a recycled resin is included, the deterioration of physical properties may be prevented, and thus mechanical properties and low-gloss characteristics may be excellent.

For example, the graft copolymer (A-1) may contain rubber having an average particle diameter of 250 to 500 nm, preferably 270 to 480 nm, more preferably 300 to 470 nm, still more preferably 330 to 460 nm, still more preferably 350 to 450 nm. In this case, impact resistance, weather resistance, whiteness, and gloss may be excellent without degradation of other physical properties.

For example, the graft copolymer (A-2) may contain rubber having an average particle diameter of 50 to 150 nm, preferably 60 to 140 nm, more preferably 65 to 130 nm, still more preferably 70 to 125 nm, still more preferably 80 to 120 nm. In this case, impact resistance, weather resistance, whiteness, and gloss may be excellent without degradation of other physical properties.

For example, the graft copolymer (A-1) may include an aromatic vinyl compound-vinyl cyanide compound copolymer (shell) having a weight average molecular weight of 100,000 to 400,000 g/mol, preferably 110,000 to 390,000 g/mol, more preferably 120,000 to 350,000 g/mol, still more preferably 120,000 to 330,000 g/mol, still more preferably 130,000 to 300,000 g/mol. Within this range, impact resistance, whiteness, thermal stability, and gloss may be excellent without degradation of other physical properties.

For example, the graft copolymer (A-2) may include an aromatic vinyl compound-vinyl cyanide compound copolymer (shell) having a weight average molecular weight of 50,000 to 300,000 g/mol, preferably 60,000 to 250,000 g/mol, more preferably 70,000 to 230,000 g/mol, still more preferably 70,000 to 200,000 g/mol, still more preferably 80,000 to 180,000 g/mol. Within this range, impact resistance, whiteness, thermal stability, and gloss may be excellent without degradation of other physical properties.

For example, the graft copolymer (A) (each of the graft copolymer (A-1) and the graft copolymer (A-2)) may have a grafting degree of 20 % or more, preferably 20 to 100 %, more preferably 22 to 80 %, still more preferably 23 to 65 %, still more preferably 25 to 55 %. Within this range, mechanical properties such as impact resistance may be excellent, and gloss and weather resistance may be excellent.

In the present disclosure, the average particle diameter of rubber may be measured without particular limitation by a measurement method commonly used in the technical field to which the present invention belongs, including an electron microscope measurement method using SEM, TEM, etc., or by the dynamic light scattering method. For example, the average particle diameter of rubber may be measured using dynamic light scattering by sampling at the point where rubber manufacturing is complete. Specifically, the average particle diameter may be measured as an intensity value using a Nicomp 380 particle size analyzer (manufacturer: PSS) in a Gaussian mode. As a specific measurement example, a sample is prepared by diluting 0.1 g of latex (TSC: 35 to 50 wt%) 1,000 to 5,000-fold with distilled water, i.e., a sample is diluted appropriately so as not to deviate significantly from an intensity setpoint of 300 kHz, and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; and measurement wavelength: 632.8 nm.

In the present disclosure, the average particle diameter may preferably be an average particle diameter based on dynamic light scattering method.

In the present disclosure, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 $\mu$l, column model: 1× PLgel 10 $\mu$m MiniMix-B (250 × 4.6 mm) + 1× PLgel 10 $\mu$m MiniMix-B (250 × 4.6 mm) + 1× PLgel 10 $\mu$m MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

In the present disclosure, to measure the weight average molecular weight of the copolymer (shell) grafted onto the rubber (core), the rubber (core) may be separated by a separation method used in the art to which the present invention pertains. For example, a sol is separated from insoluble matter (gel), and a solution is prepared by dissolving the sol in a THF solvent using a method for measuring a grafting degree to be described later. Then, the solution is filtered through a filter to obtain a filtrate, and the filtrate is used as a sample for measuring weight average molecular weight.

In the present disclosure, when measuring grafting degree, 30 g of acetone is added to 0.5 g of a powdered graft polymer, agitation is performed at 210 rpm and room temperature for 12 hours using a shaker (SKC-6075, Lab Companion Co.), centrifugation is performed at 18,000 rpm and 0 °C for 3 hours using a centrifuge (Supra R30, Hanil Science Co.) to separate only insoluble matter that is not dissolved in acetone, and the separated insoluble matter is dried via forced circulation at 85 °C for 12 hours using a forced convection oven (OF-12GW, Lab Companion Co.). Then, the weight of the dried insoluble matter is measured, and grafting degree is calculated by Equation 1 below.

[Equation 1] [93] Grafting degree (%) = [Weight (g) of grafted monomers / Weight (g) of rubber] $\times$ 100     [Equation 1]

In Equation 1, the weight of grafted monomers is a value obtained by subtracting the weight (g) of rubber from the weight of insoluble matter (gel) obtained by dissolving a graft copolymer in acetone and performing centrifugation, and the weight (g) of rubber is the weight of rubber components theoretically included in the graft copolymer powder.

For example, based on a total weight (100 % by weight) thereof, the graft copolymer (A) may include 40 to 60 % by weight of an alkyl acrylate rubber, 30 to 45 % by weight of an aromatic vinyl compound, and 5 to 20 % by weight of a vinyl cyanide compound, preferably 42 to 58 % by weight of an alkyl acrylate rubber, 32 to 43 % by weight of an aromatic vinyl compound, and 7 to 18 % by weight of a vinyl cyanide compound, more preferably 42 to 55 % by weight of an alkyl acrylate rubber, 33 to 42 % by weight of an aromatic vinyl compound, and 10 to 18 % by weight of a vinyl cyanide compound, still more preferably 45 to 52 % by weight of an alkyl acrylate rubber, 33 to 40 % by weight of an aromatic vinyl compound, and 12 to 16 % by weight of a vinyl cyanide compound. Within this range, the compatibility with other resins may be improved, and thus mechanical properties and molding processability may be excellent.

Here, the composition ratio of each component constituting the graft copolymer (A-1) and the graft copolymer (A-2) may be appropriately controlled independently within the above-described range.

For example, the graft copolymer (A) may be prepared by emulsion polymerization. In this case, impact resistance and compatibility may be excellent.

The emulsion polymerization may be performed without any special limitation by an emulsion polymerization method commonly practiced in the technical field to which the present invention belongs, for example, by an emulsion graft polymerization method.

For example, a method of preparing the graft copolymer (A) may include step i) of preparing an alkyl acrylate rubber by including an alkyl acrylate; and step ii) of preparing a graft copolymer by graft-polymerizing an aromatic vinyl compound and a vinyl cyanide compound in the presence of the rubber. In this case, mechanical properties, weather resistance, thermal stability, appearance, and molding processability may be excellent.

The method of preparing the graft copolymer (A) may preferably include step i) of preparing rubber by polymerizing 40 to 60 % by weight of an alkyl acrylate based on 100 % by weight in total thereof in the presence of a crosslinking agent, an initiator, an electrolyte, and an emulsifier; and step ii) of preparing a graft copolymer by graft-polymerizing 40 to 60 % by weight in sum of an aromatic vinyl compound and vinyl cyanide compound onto the rubber in the presence of a crosslinking agent, an initiator, and an emulsifier. In this case, mechanical properties, weather resistance, thermal stability, appearance, and molding processability may be excellent.

For example, the graft copolymer (A) may include a polymer seed. In this case, the polymer seed may be included in the alkyl acrylate rubber in an amount of 10 to 30 % by weight, preferably 15 to 25 % by weight (based on 100 % by weight in sum of the rubber and seed).

As a specific example, the graft copolymer (A) may include a polymer seed including one or more selected from the group consisting of an alkyl (meth)acrylate, an aromatic vinyl compound, and a vinyl cyanide compound; an alkyl acrylate rubber (core) surrounding the polymer seed; and an aromatic vinyl compound-vinyl cyanide compound copolymer (shell) surrounding the rubber (core). In this case, molding processability, impact resistance, and weather resistance may be excellent.

The polymer seed may preferably be a rubber seed composed of an alkyl acrylate rubber. In this case, the manufacturing process may be easily performed, and thus the physical property balance may be further improved.

For example, the method of preparing the graft copolymer (A) may include step i) of preparing a polymer seed by including one or more selected from the group consisting of an alkyl (meth)acrylate, an aromatic vinyl compound, and a vinyl cyanide compound; step ii) of preparing an alkyl acrylate rubber (core) by including an alkyl acrylate in the presence of the polymer seed; and step iii) of preparing a graft copolymer by graft-polymerizing an aromatic vinyl compound and a vinyl cyanide compound onto the rubber (core). In this case, molding processability, impact resistance, and weather resistance may be excellent.

In the present disclosure, the content of a monomer in a polymer may mean a content (% by weight) of the monomer fed when the polymer is prepared, or may mean a value (% by weight) calculated by converting a unit in the polymer into the monomer.

In the present disclosure, the alkyl (meth)acrylate may be defined as a category that includes both alkyl acrylate and alkyl methacrylate.

In the present disclosure, for example, the alkyl acrylate may be an alkyl acrylate including an alkyl group having 1 to 15 carbon atoms, preferably may include one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably may be an alkyl acrylate including an alkyl group having 1 to 4 carbon atoms or 8 carbon atoms, still more preferably may be n-butylacrylate, 2-ethylhexyl acrylate, or a mixture thereof, still more preferably may be butyl acrylate.

In the present disclosure, for example, the alkyl methacrylate may be an alkyl methacrylate including an alkyl group having 1 to 15 carbon atoms, preferably may include one or more selected from the group consisting of methyl methacrylate, ethyl methacrylate, butyl methacrylate, 2-ethylbutyl methacrylate, 2-ethylhexylmethacrylate, and lauryl methacrylate, more preferably may be an alkyl methacrylate including an alkyl group having 1 to 4 carbon atoms, still more preferably may be methyl methacrylate.

In the present disclosure, for example, the aromatic vinyl compound may include one or more selected from the group consisting of styrene, α-methyl styrene, o-methyl styrene, ρ-methyl styrene, m-methyl styrene, ethyl styrene, isobutyl styrene, t-butyl styrene, o-bromo styrene, p-bromo styrene, m-bromo styrene, o-chloro styrene, ρ-chloro styrene, m-chloro styrene, vinyltoluene, vinylxylene, fluorostyrene, and vinylnaphthalene, preferably styrene.

In the present disclosure, for example, the vinyl cyanide compound may include one or more selected from the group consisting of acrylonitrile, methacrylonitrile, ethylacrylonitrile, and isopropylacrylonitrile, preferably acrylonitrile.

As the emulsifiers used in the step of preparing a polymer seed (when including a polymer seed), the step of preparing a rubber core, and the step of preparing a copolymer shell, emulsifiers commonly used in the art to which the present invention pertains may be used without particular limitation. For example, the emulsifiers may include one or more selected from the group consisting of an alkyl sulfosuccinate metal salt having 12 to 18 carbon atoms or a derivative thereof, an alkyl sulfate ester having 12 to 20 carbon atoms or a derivative thereof, an alkyl sulfonic acid metal salt having 12 to 20 carbon atoms or a derivative thereof, fatty acid soap, and rosin acid soap.

The alkyl sulfosuccinate metal salt having 12 to 18 carbon atoms or the derivative thereof may preferably include one or more selected from the group consisting of dicyclohexyl sulfosuccinate, dihexyl sulfosuccinate, di-2-ethyl hexyl sulfosuccinate sodium salt, di-2-ethyl hexyl sulfosuccinate potassium salt, dioctyl sulfosuccinate sodium salt, and dioctyl sulfosuccinate potassium salt.

The alkyl sulfate ester having 12 to 20 carbon atoms or the derivative thereof may preferably include one or more selected from the group consisting of sodium lauryl sulfate, sodium dodecyl sulfate, sodium octadecyl sulfate, potassium dodecyl sulfate, and potassium octadecyl sulfate. In addition, other sulfuric acid ester emulsifiers, such as sodium dodecyl benzene sulfate and sodium oleic sulfate, may also be used in one or more types.

The fatty acid soap may preferably include one or more selected from the group consisting of sodium or potassium salts of oleic acid, stearic acid, lauric acid, and mixed fatty acids.

The rosin acid soap may preferably be an abietic acid salt, specifically an abietic metal salt.

For example, based on 100 parts by weight in total of the graft copolymer (A), for each step, the emulsifier may be used in an amount of 0.01 to 5 parts by weight, preferably 0.05 to 4 parts by weight, more preferably 0.5 to 3 parts by weight.

The initiator is not particularly limited, but a radical initiator may be preferably used.

For example, the radical initiator may include one or more selected from the group consisting of inorganic peroxides, organic peroxides (except ketal, carbonate and azo compounds), peroxyketal peroxides, peroxycarbonate peroxides, and azo compounds.

The inorganic peroxide may preferably include one or more selected from the group consisting of sodium persulfate, potassium persulfate, ammonium persulfate, potassium perphosphate, and hydrogen peroxide.

For example, the organic peroxide may include one or more selected from the group consisting of t-butyl peroxide, cumene hydroperoxide, p-menthanehydro peroxide, di-t-butyl peroxide, dicumyl peroxide, t-butylcumyl peroxide, 2,5-dimethyl-2,5-di(t-butyl peroxy)-hexane, di-t-amyl peroxide, 1,1-di(t-butylperoxy)-3,3,5-trimethylcyclohexane, 1,1-di(t-butylperoxy)-cyclohexane, 1,1-di(t-amylperoxy)-cyclohexane, ethyl 3,3-di(t-amylperoxy)-butyrate, diisopropylbenzene mono-hydroperoxide, t-amyl hydroperoxide, t-butyl hydroperoxide, t-butyl peroxyneodecanoate, t-butyl peroxypivalate, di-(3,3,5-trimethylhexanoyl)-peroxide, t-butyl peroxy-2-ethylhexanoate, t-butyl peroxy-3,3,5-trimethylhexanoyl, t-amyl peroxy neodecanoate, t-amyl peroxy pivalate, t-amyl peroxy-2-ethylhexanoate, t-butyl peroxyacetate, t-butyl peroxybenzoate, t-amyl peroxy 2-ethylhexyl carbonate, t-butyl peroxy 2-ethylhexyl carbonate, t-butyl peroxy isopropyl monocarbonate, t-butyl peroxy maleic acid, cumyl peroxyneodecanoate, 1,1,3,3,-tetramethylbutyl peroxy neodecanoate, 1,1,3,3,-tetramethylbutyl peroxy 2-ethylhexanoate, di-2-2ethylhexyl peroxydicarbonate, 3-hydroxy-1,1-dimethylbutylperoxyneodecanoate, acetyl peroxide, isobutyl peroxide, octanoyl peroxide, dibenzoyl peroxide, dilauroyl peroxide, 3,5,5-trimethylhexanet peroxide, and t-butyl peroxy isobutyrate.

The peroxy ketal peroxide may preferably include one or more selected from the group consisting of 1,1-di(t-butylperoxy)-3,3,5-trimethylcyclohexane, 1,1-di(t-butylperoxy)cyclohexane, 1,1-di(t-amylperoxy)cyclohexane, ethyl-3,3-di(t-butylperoxy)butyrate, and ethyl-3,3-di(t-amylperoxy)butyrate.

The peroxycarbonate peroxide may preferably include one or more selected from the group consisting of dialkyl peroxides such as dicumylperoxide, di(t-butylperoxy)-m/p-diisopropylbenzene, 2,5-dimethyl-2,5-(t-butylperoxy)hexane, t-butylcumyl peroxide, and 2,5-methyl-2,5-(t-butylperoxy)hexyne-3, t-butyl peroxy 2-ethylhexyl mono carbonate, and t-butyl peroxybenzoate.

The azo compound may preferably include one or more selected from the group consisting of azobis isobutyronitrile, azobis-2,4-dimethylvaleronitrile, azobiscyclohexanecarbonitrile, and azobis isobutyl acid methyl.

For example, based on 100 parts by weight in total of the graft copolymer (A), for each step, the initiator may be used in an amount of 0.001 to 2 parts by weight, preferably 0.01 to 1 part by weight.

In at least one of the polymer seed preparation step (when the polymer seed is included), the rubber (core) preparation step, and the copolymer (shell) preparation step, a redox catalyst may be preferably used to further promote an initiation reaction in combination with the initiator.

For example, the redox catalyst may include one or more selected from the group consisting of sodium pyrophosphate, dextrose, ferrous sulfide, sodium sulfite, sodium formaldehyde sulfoxylate, and sodium ethylenediamine tetraacetate, preferably a mixture of sodium pyrophosphate, dextrose, and ferrous sulfide, without being limited thereto.

For example, based on 100 parts by weight in total of the graft copolymer (A), for each step, the catalyst may be used in an amount of 0.001 to 2 parts by weight, preferably 0.002 to 1 part by weight.

In at least one of the polymer seed preparation step (when the polymer seed is included), the polymer rubber (core) preparation step, and the copolymer (shell) preparation step, an activator may be used to promote the initiation reaction of peroxide in combination with the polymerization initiator.

As the activator, an activator commonly used in the technical field to which the present invention belongs may be used without any particular limitation.

Based on 100 parts by weight in total of the graft copolymer (A), the input amount of the activator may be 0.01 to 3 parts by weight, preferably 0.01 to 1 part by weight. Within this range, high degrees of polymerization may be achieved.

For example, as the electrolyte, one or more selected from the group consisting of KCl, NaCl, $KHCO_3$, $NaHCO_3$, $K_2CO_3$, $Na_2CO_3$, $KHSO_4$, $NaHSO_4$, $Na_2S_2O_7$, $K_3P_2O_7$, $K_3PO_4$, $Na_3PO_4$, KOH, NaOH, and $Na_2HPO_4$ may be used, without being limited thereto.

Based on 100 parts by weight in total of the graft copolymer (A), the total input amount of the electrolyte may be 0.001 to 1 part by weight, preferably 0.01 to 0.5 parts by weight. Within this range, high degrees of polymerization may be achieved.

In the present disclosure, unless otherwise defined, crosslinking agents commonly used in the art to which the present invention pertains may be used in the present invention without particular limitation. For example, a compound including an unsaturated vinyl group and being capable of serving as a crosslinking agent or a compound including two or more unsaturated vinyl groups having different reactivities may be used as the crosslinking agent of the present invention. As a specific example, the crosslinking agent of the present invention may include one or more selected from the group consisting of polyethyleneglycol diacrylate, polyethyleneglycol dimethacrylate, polypropyleneglycol diacrylate, polypropyleneglycol dimethacrylate, ethyleneglycol diacrylate, ethyleneglycol dimethacrylate, divinylbenzene, diethyleneglycol dimethacrylate, triethyleneglycol dimethacrylate, 1,3-butadiol dimethacrylate, hexanediol propoxylate diacrylate, neopentylglycol dimethacrylate, neopentylglycol ethoxylate diacrylate, neopentylglycol propoxylate diacrylate, trimethylolpropane trimethacrylate, trimethylolmethane triacrylate, trimethylolpropane ethoxylate triacrylate, trimethylolpropane propoxylate triacrylate, pentaerythritol ethoxylate triacrylate, pentaerythritol propoxylate triacrylate, vinyltrimethoxysilane, allyl methacrylate, triallyl isocyanurate, triallyl amine, and diallyl amine, without being limited thereto.

For example, based on 100 parts by weight in total of the graft copolymer (A), for each step, the crosslinking agent may be used in an amount of 0.01 to 5 parts by weight, preferably 0.01 to 3 parts by weight, more preferably 0.05 to 1 part by weight.

For example, in the copolymer shell preparation step, a molecular weight regulator may be used.

For example, based on 100 parts by weight in total of the graft copolymer (A), the molecular weight regulator may be used in an amount of 0.01 to 2 parts by weight, preferably 0.05 to 2 parts by weight, more preferably 0.05 to 1 part by weight. Within this range, a polymer having a desired molecular weight may be easily produced.

For example, as the molecular weight regulator, one or more selected from the group consisting of α-methylstyrene dimer, t-dodecyl mercaptan, n-dodecyl mercaptan, octyl mercaptan, carbon tetrachloride, methylene chloride, methylene bromide, tetra ethyl thiuram disulfide, dipentamethylene thiuram disulfide, and diisopropylxanthogen disulfide may be used, without being limited thereto.

In the present disclosure, 100 parts by weight of the graft copolymer may mean the total weight of the finally obtained graft copolymer; the total weight of the monomers used in the preparation of the polymer seed (when the polymer seed is included), the rubber core, and the graft shell, considering that most of the added monomers are used for polymerization; or the total weight of the monomers added in the preparation of the polymer seed (when the polymer seed is included) and the rubber core and the monomers added in the preparation of the graft shell.

In the present disclosure, % means % by weight unless otherwise defined.

In the step of preparing a seed and the step of preparing a core, as a method of feeding monomers, batch feed or continuous feed may be used alone, or two methods may be used in combination.

In the present disclosure, "continuous feed" means that components are not fed batchwise. For example, according to continuous feed, components may be fed for 10 minutes or more, 30 minutes or more, 1 hour or more, preferably 2 hours or more within a polymerization time range in drop by drop, little by little, step by step, or continuous flow.

For example, the emulsion polymerization is not particularly limited, but may be performed at 50 to 85 °C, preferably 60 to 80 °C.

For example, latex formed after the polymerization of the graft copolymer (A) may be prepared in the form of powder through a conventional process including coagulation, washing, and drying. As a specific example, a metal salt or an acid is added, coagulation is performed at 60 to 100 °C, and aging, dehydration, washing, and drying are performed to prepare the latex of the copolymer (A) in powder form, but the present invention is not limited thereto.

For example, the graft copolymer (A) may be any commercially available product as long as the product complies with the definition of the present invention..


(B) Aromatic vinyl compound-vinyl cyanide compound copolymer

Based on 100 % by weight of the base resin, the aromatic vinyl compound-vinyl cyanide compound copolymer (B) (hereinafter referred to as copolymer (B)) may be included in an amount of 20 to 55 % by weight, preferably 22 to 55 % by weight, more preferably 25 to 53 % by weight, still more preferably 27 to 52 % by weight, still more preferably 28 to 50 % by weight. Within this range, mechanical properties, film processability, gloss, whiteness, weather resistance, and thermal stability may be excellent. In addition, even when including a recycled resin, the deterioration of physical properties may be prevented, thereby achieving eco-friendliness. In addition, low-gloss characteristics may be excellent.

For example, the copolymer (B) may include one or more selected from the group consisting of a copolymer (B-1) (hereinafter referred to as 'copolymer (B-1) ') including an aromatic vinyl compound not containing an alkyl-substituted aromatic vinyl compound and a vinyl cyanide compound and a heat-resistant aromatic vinyl compound-vinyl cyanide compound copolymer (B-2) (hereinafter referred to as 'copolymer (B-2) ') including an alkyl-substituted aromatic vinyl compound.

As a specific example, the copolymer (B-1) may include 55 to 85 % by weight of an alkyl non-substituted aromatic vinyl compound and 15 to 45 % by weight of a vinyl cyanide compound, preferably 60 to 82 % by weight of an alkyl non-substituted aromatic vinyl compound and 18 to 40 % by weight of a vinyl cyanide compound, more preferably 65 to 82 % by weight of an alkyl non-substituted aromatic vinyl compound and 18 to 35 % by weight of a vinyl cyanide compound, still more preferably 65 to 80 % by weight of an alkyl non-substituted aromatic vinyl compound and 20 to 35 % by weight of a vinyl cyanide compound. In this case, mechanical properties may be excellent without degradation of other physical properties. For example, the copolymer (B-1) may be called a 'non-heat-resistant SAN-based resin' or 'general SAN-based resin' in that the copolymer (B-1) does not contain a heat-resistant monomer that imparts heat resistance to a copolymer, which is composed of an alkyl-substituted aromatic vinyl compound.

For example, the copolymer (B-2) may include 60 to 80 % by weight of an alkyl-substituted aromatic vinyl compound, 20 to 40 % by weight of a vinyl cyanide compound, and 0 to 20 % by weight of an alkyl non-substituted aromatic vinyl compound, preferably 62 to 80 % by weight of an alkyl-substituted aromatic vinyl compound, 20 to 38 % by weight of a vinyl cyanide compound, and 0 to 17 % by weight of an alkyl non-substituted aromatic vinyl compound, more preferably 63 to 77 % by weight of an alkyl-substituted aromatic vinyl compound, 23 to 37 % by weight of a vinyl cyanide compound, and 0 to 13 % by weight of an alkyl non-substituted aromatic vinyl compound, still more preferably 65 to 75 % by weight of an alkyl-substituted aromatic vinyl compound, 25 to 35 % by weight of a vinyl cyanide compound, and 0 to 10 % by weight of an alkyl non-substituted aromatic vinyl compound. In this case, heat resistance and mechanical properties may be excellent without degradation of other physical properties. For example, the copolymer (B-2) may be called a 'heat-resistant SAN-based resin' because the copolymer (B-2) contains a heat-resistant monomer such as an alkyl-substituted aromatic vinyl compound.

For example, the copolymer (B-2) may not include an alkyl non-substituted aromatic vinyl compound, and may include 60 to 80 % by weight of an alkyl-substituted aromatic vinyl compound and 20 to 40 % by weight of a vinyl cyanide compound, preferably 63 to 77 % by weight of an alkyl-substituted aromatic vinyl compound and 23 to 37 % by weight of a vinyl cyanide compound, still more preferably 65 to 75 % by weight of an alkyl-substituted aromatic vinyl compound and 25 to 35 % by weight of a vinyl cyanide compound. In this case, heat resistance may be excellent without degradation of other physical properties.

Here, the % by weight of the copolymer (B) included in the base resin represents the % by weight of the copolymer (B-1) when only the copolymer (B-1) is included, the % by weight of the copolymer (B-2) when only the copolymer (B-2) is included, and the % by weight in sum of the copolymer (B-1) and the copolymer (B-2) when a mixture of the copolymer (B-1) and the copolymer (B-2) is included, the sum of their respective % by weights.

For example, the alkyl-substituted aromatic vinyl compound may include one or more selected from the group consisting of α-methyl styrene, α-ethyl styrene, p-methyl styrene, and m-methyl styrene, preferably α-methyl styrene.

For example, the type of the alkyl non-substituted aromatic vinyl compound may be appropriately selected within the range of the aromatic vinyl compound mentioned in the graft copolymer (A) that does not contain an alkyl substituent, and may preferably be styrene.

The type of vinyl cyanide compound included in the copolymer (B) may be appropriately selected within the range of vinyl cyanide compounds mentioned in the graft copolymer (A).

For example, the copolymer (B) may have a weight average molecular weight of 30,000 to 300,000 g/mol, preferably 30,000 to 200,000 g/mol, more preferably 40,000 to 190,000 g/mol, still more preferably 40,000 to 180,000 g/mol, still more preferably 50,000 to 180,000 g/mol. In this case, mechanical properties may be excellent without degradation of other physical properties.

More specifically, the copolymer (B-1) may have a weight average molecular weight of 50,000 to 300,000 g/mol, preferably 70,000 to 200,000 g/mol, more preferably 80,000 to 190,000 g/mol, still more preferably 80,000 to 180,000 g/mol, still more preferably 90,000 to 180,000 g/mol. In this case, mechanical properties may be excellent without degradation of other physical properties.

For example, the copolymer (B-2) may have a weight average molecular weight of 30,000 to 200,000 g/mol, preferably 30,000 to 180,000 g/mol, more preferably 40,000 to 150,000 g/mol, still more preferably 50,000 to 140,000 g/mol, still more preferably 50,000 to 130,000 g/mol. In this case, heat resistance and mechanical properties may be excellent without degradation of other physical properties.

For example, the copolymer (B) may be prepared by a method commonly applied in the technical field to which the present invention belongs, and commercially available products may also be used as long as the products follow the definition of the present invention.

(C) Polyalkylene terephthalate

Based on 100 % by weight of the base resin, the polyalkylene terephthalate (C) may be included in an amount of 10 to 40 % by weight, preferably 15 to 37 % by weight, more preferably 18 to 35 % by weight, still more preferably 20 to 34 % by weight, still more preferably 22 to 33 % by weight. Within this range, compatibility may be excellent, and thus mechanical properties, gloss, whiteness, film processability, weather resistance, and thermal stability may be excellent. In addition, even when a recycled resin is included, the deterioration of physical properties may be prevented, thereby achieving eco-friendliness. In addition, compatibility may be excellent, and thus impact resistance, film processability, low-gloss characteristics, weather resistance, and thermal stability may be excellent.

For example, the polyalkylene terephthalate (C) may be selected from a recycled polyalkylene terephthalate, a non-recycled polyalkylene terephthalate, and a mixture thereof. In this case, mechanical properties, gloss, whiteness, film processability, weather resistance, and thermal stability may be secured. In addition, the deterioration of physical properties due to the non-recycled resin may be prevented, thereby achieving eco-friendliness. In addition, when a non-recycled polyalkylene terephthalate is applied according to a molding processing method, high injection gloss may be implemented. Even when a recycled polyalkylene terephthalate is applied, excellent extrusion low-gloss characteristics may be implemented. Accordingly, as needed, a recycled polyalkylene terephthalate and/or a non-recycled polyalkylene terephthalate may be appropriately selected as the polyalkylene terephthalate (C).

Here, the % by weight of the polyalkylene terephthalate (C) included in the base resin represents the % by weight of the recycled polyalkylene terephthalate when only the recycled polyalkylene terephthalate is included, the % by weight of the non-recycled polyalkylene terephthalate when only the non-recycled polyalkylene terephthalate is included, and the % by weight in sum of the recycled polyalkylene terephthalate and non-recycled polyalkylene terephthalate when a mixture thereof is included.

For example, the polyalkylene terephthalate (C) may have an intrinsic viscosity (I.V.) of 0.5 to 1.5 dl/g, preferably 0.5 to 1.2 dl/g, more preferably 0.5 to 1.1 dl/g, still more preferably 0.6 to 1.0 dl/g, still more preferably 0.6 to 0.8 dl/g. Within this range, compatibility may be excellent, and thus mechanical properties and molding processability may be excellent.

In the present disclosure, the intrinsic viscosity may be measured by a method commonly performed in the technical field to which the present invention belongs, unless otherwise specified. As a specific example, when intrinsic viscosity is measured, a sample solution with a concentration of 0.05 g/ml is prepared by completely dissolving a sample in methylene chloride as a solvent, and then is filtered using a filter to obtain a filtrate. Then, using the obtained filtrate, intrinsic viscosity is measured at 20 °C using a Ubbelohde viscometer.

For example, the polyalkylene terephthalate (C) may include one or more selected from the group consisting of polybutylene terephthalate (PBT), polyethylene terephthalate (PET), and polytrimethylene terephthalate(PTT), preferably one or more selected from the group consisting of polybutylene terephthalate and polyethylene terephthalate, more preferably polyethylene terephthalate. In this case, the intended effects of the present invention may be fully realized, and impact resistance may be excellent.

For example, the polyethylene terephthalate resin may include one or more selected from the group consisting of a recycled polyethylene terephthalate resin derived from a polyethylene terephthalate homopolymer obtained by polymerizing terephthalic acid and ethylene glycol; and a polyethylene terephthalate copolymer including terephthalic acid, ethyleneglycol and at least one of 1,4-cyclohexanedimethanol, isophthalic acid, and butanediol as a comonomer. In this case, impact resistance and heat resistance may be excellent. In addition, when a recycled polyethylene terephthalate is applied, excellent low-gloss characteristics may be implemented. In addition, when a non-recycled polyethylene terephthalate is applied, high gloss may be implemented.

The recycled polyalkylene terephthalate refers to a recycled resin obtained by recycling a waste polyalkylene terephthalate. In this case, waste polyalkylene terephthalate, including waste PET, which is one of the waste plastics with the largest emissions, may be used, so raw materials may be easily obtained and advantageous advantages in terms of environmental friendliness may be obtained.

For example, the polyalkylene terephthalate (C) may have a melting point of 200 to 280 °C, preferably 220 to 275 °C, more preferably 240 to 270 °C. Within this range, the intended effects may be fully expressed.

In the present disclosure, the melting point may be measured using methods known in the polymer field, for example, the heat absorption peak may be measured using differential scanning calorimetry (DSC).

For example, the polyalkylene terephthalate (C) may have a glass transition temperature of 60 to 100 °C, preferably 65 to 90 °C. Within this range, impact resistance and molding processability may be excellent.

In the present disclosure, the glass transition temperature may be measured using a differential scanning calorimeter (DSC) according to ASTM D3418, and for example, the glass transition temperature may be measured using a TA Instrument's Q100 DSC (differential scanning calorimeter) at a heating rate of 10 °C/min.

As long as a recycled or non-recycled polyalkylene terephthalate resin follows the definition of the present invention as the recycled or non-recycled polyalkylene terephthalate (C), any recycled or non-recycled polyalkylene terephthalate resin commonly used in the technical field to which the present invention belongs may be used without particular limitation, and products available on the market may be used.

(D) Compatibilizer

Based on 100 parts by weight of the base resin, the compatibilizer (D) may be included in an amount of 0.5 to 10 parts by weight, preferably 1 to 9 parts by weight, more preferably 1.5 to 8.5 parts by weight, still more preferably 1.7 to 8 parts by weight. Within this range, the compatibility between the graft copolymer (A) and the polyalkylene terephthalate (C) may be greatly improved, and thus mechanical properties, gloss, whiteness, film processability, weather resistance, and thermal stability may be excellent. In addition, when the recycled polyalkylene terephthalate is applied, even when the proportion of recycled resin is, for example, 10 % by weight or more, the deterioration of physical properties may be prevented, thereby achieving eco-friendliness. In addition, impact resistance, film processability, and low-gloss characteristics may be excellent.

As a specific example, the compatibilizer (D) may be included in an amount of 1.3 to 6 parts by weight, preferably 1.5 to 5 parts by weight, more preferably 1.6 to 4.5 parts by weight, still more preferably 1.7 to 4 parts by weight, still more preferably 1.8 to 2.8 parts by weight. In this case, since compatibility may be improved even with a small amount, the intended effects of the present invention may be fully expressed.

For example, the compatibilizer (D) may include one or more selected from the group consisting of an ethylene-methyl acrylate copolymer (EMA), an ethylene-butyl acrylate copolymer (EBA), an ethylene-vinyl acetate copolymer (EVA), an ethylene-methyl acrylate-glycidyl methacrylate copolymer (EMA-GMA), and an ethylene-butyl acrylate-glycidyl methacrylate copolymer (EBA-GMA), preferably one or more selected from olefin-alkyl acrylate copolymers, more preferably an ethylene-methyl acrylate copolymer. In this case, mechanical properties, gloss, whiteness, film processability, weather resistance, and thermal stability may be excellent. In addition, even when including a recycled resin, eco-friendliness may be achieved, and impact resistance, film processability, and low-gloss characteristics may be excellent.

For example, the compatibilizer (D) may be composed of an olefin compound, an alkyl (meth)acrylate or alkenyl acetate, and optionally a glycidyl methacrylate. As a specific example, the compatibilizer (D) may include 30 to 90 % by weight of an olefin compound, 10 to 70 % by weight of alkyl (meth)acrylate or alkenyl acetate, and 0 to 15 % by weight of glycidyl methacrylate. In this case, the intended effects may be fully expressed.

The compatibilizer (D) may preferably include 50 to 90 % by weight of ethylene and 10 to 50 % by weight of methyl acrylate or vinyl acetate, more preferably 55 to 80 % by weight of ethylene and 20 to 45 % by weight of methyl acrylate or vinyl acetate, still more preferably 60 to 80 % by weight of ethylene and 20 to 40 % by weight of methyl acrylate or vinyl acetate. In this case, the intended effects may be fully expressed. More preferably, the compatibilizer (D) may be an ethylene-methyl acrylate copolymer. In this case, raw materials are easily obtained.

For example, the compatibilizer (D) may have a melting index of 1 to 10 g/10 min, preferably 2 to 5 g/10 min as measured at 190 °C under a load of 2.16 kg according to ASTM D1238. Within this range, film processability may be excellent without degradation of other physical properties.

For example, the compatibilizer (D) may have a melting point of 80 to 110 °C, preferably 82 to 105 °C, more preferably 85 to 100 °C. Within this range, mechanical strength and molding processability may be excellent.

The method of preparing the compatibilizer (D) is not particularly limited as long as the method is a method commonly applied in this technical field, and commercially available products may be used as long as the products follow the definition of the present invention.

Thermoplastic resin composition

The thermoplastic resin composition includes 100 parts by weight of a base resin including 15 to 50 % by weight of the graft copolymer (A), 20 to 55 % by weight of the copolymer (B), and 10 to 40 % by weight of the polyalkylene terephthalate (C); and 0.5 to 10 parts by weight of a compatibilizer (D). In this case, the intrinsic mechanical properties of an ASA-based resin and polyester resin may be maintained at a certain level or higher, and injection gloss, whiteness, film processability, weather resistance, and thermal stability may be excellent. In addition, even when including a recycled resin, the deterioration of physical properties may be prevented, thereby achieving eco-friendliness. In addition, film processability, extrusion low-gloss characteristics, weather resistance and thermal stability may be excellent.

For example, in the thermoplastic resin composition, the weight ratio (A:C) of the graft copolymer (A) to the polyalkylene terephthalate (C) may be 0.5 to 2.0 : 1, preferably 0.5 to 1.8 : 1, more preferably 0.6 to 1.5: 1, still more preferably 0.7 to 1.3 : 1. In this case, impact resistance, film processability, gloss, and whiteness may be excellent. In addition when a recycled resin is included, eco-friendliness may be achieved, and low-gloss characteristics, film processability, and impact resistance may be excellent.

The thermoplastic resin composition includes acrylate rubber as a rubber component, but does not contain conjugated diene rubber, so the thermoplastic resin composition has excellent weather resistance. Thus, physical properties may be maintained for a long period of time even when exposed to aging-causing environments such as heat or ultraviolet rays. In addition, even when the ASA-based resin and the polyester resin, which have poor compatibility with each other, are included, film processability and thermal stability may be excellent.

For example, the thermoplastic resin composition may have an injection gloss of 108 or more, preferably 108 to 130, more preferably 108 to 125, still more preferably 109 to 120 as measured at 45° for an injection-molded specimen having a thickness of 3 mm according to ASTM D2457. In this case, gloss may be excellent without degradation of other physical properties. Here, the unit of gloss may be GU (gloss unit).

For example, the thermoplastic resin composition may include a non-recycled polyalkylene terephthalate as the polyalkylene terephthalate (C), and may be a high-gloss resin composition having an injection gloss of 108 or more. In this case, in addition to gloss, film processability, impact resistance, weather resistance, and thermal stability may be excellent, and thus the thermoplastic resin composition may provide high-quality, high-gloss injection molded articles.

For example, the thermoplastic resin composition may have an extrusion gloss of less than 50, preferably 20 to 47, more preferably 22 to 45, still more preferably 23 to 42, still more preferably 25 to 40 as measured at 45° for an extruded film specimen having a thickness of 0.08 mm according to ASTM D2457. In this case, low-gloss characteristics may be excellent without degradation of other physical properties.

For example, the thermoplastic resin composition may include a recycled polyalkylene terephthalate as the polyalkylene terephthalate (C), and may be a low-gloss resin composition having an extrusion gloss of less than 50. In this case, eco-friendliness may be achieved, and low-gloss characteristics, film processability, impact resistance, weather resistance, and thermal stability may be excellent. Thus, the thermoplastic resin composition may provide high-quality, eco-friendly, low-gloss films.

For example, since the thermoplastic resin composition has excellent film processability, the torque applied to an extruder during a film extrusion process is low, and accordingly, a film having a uniform thickness and a uniform gloss may be manufactured. That is, the film appearance quality may be excellent.

In the present disclosure, torque refers to the size of the output required to rotate the screw at a set rotation speed during the extrusion process of the molten mixture or pellets of the thermoplastic resin composition using a film extruder, and may be measured by a sensor built into the extruder. In the film extrusion process, when the molding conditions such as molding temperature, screw rotation speed (rpm), and composition feed rate are the same, a higher torque value means a greater load applied to the extruder, which means that the flowability of the composition, i.e., the molding processability, is poor. Accordingly, when the molding conditions are the same, as the torque value increases, the thickness uniformity of the film may deteriorate. Conversely, a lower torque value indicates a lower load on the extruder, which indicates better flowability of the composition. In this case, film processability and the uniformity of film thickness may be excellent.

In the present disclosure, as a measurement example, torque may be measured under the extrusion molding conditions of a molding temperature of 250 °C, a molding pressure of 200 kgf/cm$^2$, a screw rotation speed of 100 rpm, a roll temperature of 85 °C, a roll rotation speed of 3.5 m/min, and a film thickness of 0.08 mm using a T-die extruder (Techline 20T manufactured by Collins Co., screw diameter: 20 mm, L/D = 25), and may be expressed as a percentage of the maximum torque value (output limit) at which the extruder may operate. The ratio of the maximum torque value at which the extruder may operate may be measured by a sensor built into the extruder and displayed as a value on the torque display.

Method of preparing thermoplastic resin composition

A method of preparing the thermoplastic resin composition of the present invention includes a step of kneading and extruding, at 170 to 300 °C and 100 to 400 rpm, 100 parts by weight of a base resin including 15 to 50 % by weight of an alkyl acrylate-aromatic vinyl compound-vinyl cyanide compound graft copolymer (A), 20 to 55 % by weight of an aromatic vinyl compound-vinyl cyanide compound copolymer (B), and 10 to 40 % by weight of the polyalkylene terephthalate (C) and 0.5 to 10 parts by weight of a compatibilizer (D). In this case, compatibility may be greatly improved, thereby maintaining the intrinsic mechanical properties of an ASA-based resin and a polyester resin at a certain level or higher. In addition, film processability, gloss, whiteness, weather resistance, and thermal stability may be excellent. In addition, even when a recycled resin is included, the deterioration of physical properties may be prevented, thereby achieving eco-friendliness. In addition, film processability and low-gloss characteristics may be excellent.

For example, the kneading and extrusion step may be performed using one or more selected from a single-screw extruder, a twin-screw extruder, and a Banbury mixer. The composition may be uniformly mixed using the above mixer and then extruded to obtain a thermoplastic resin composition in the form of pellets. In this case, deterioration of mechanical properties and heat resistance may be prevented, and appearance may be excellent.

For example, the kneading and extrusion step may be performed at a cylinder temperature of an extruder of 170 to 300 °C, preferably 200 to 280 °C, more preferably 220 to 270 °C. In this case, the processing capacity per unit time may be appropriate, melt-kneading may be sufficiently achieved, and thermal decomposition may be suppressed.

For example, the kneading and extruding may be performed at a screw rotation speed of 100 to 400 rpm, preferably 110 to 350 rpm, more preferably 120 to 270 rpm. In this case, the processing capacity per unit time may be appropriate, and thus process efficiency may be excellent.

When necessary, based on 100 parts by weight of the base resin, the thermoplastic resin composition may further include one or more additives selected from the group consisting of a lubricant, a heat stabilizer, a light stabilizer, a pigment, a release agent, an antistatic agent, an antibacterial agent, a processing aid, a metal deactivator, a flame retardant, a flame suppressor, an anti-drip agent, an inorganic filler, an anti-friction agent, and an anti-wear agent in an amount of 0.01 to 15 parts by weight, 0.05 to 12 parts by weight, 0.1 to 5 parts by weight, 0.3 to 10 parts by weight, 0.3 to 7 parts by weight, or 0.3 to 5 parts by weight. Within this range, desired physical properties may be well implemented without degrading the intended physical properties.

For example, the lubricant may include one or more selected from the group consisting of a fatty acid amide-based compound, montan-based wax, silicone oil, and olefin-based wax, preferably olefin-based wax, and more preferably polyethylene wax. In this case, molding processability and mold releasability may be excellent.

For example, the fatty acid amide-based compound may include one or more selected from the group consisting of stearamide, behenamide, ethylene bis(stearamide), N,N'-ethylene bis(12-hydroxystearamide), erucamide, oleamide, and ethylene bis oleamide.

For example, the montan-based wax may be montan wax, montan ester wax, or a mixture thereof.

For example, the silicone oil may include one or more selected from the group consisting of dimethyl silicone oil, methyl hydrogen silicone oil, ester-modified silicone oil, hydroxy silicone oil, carbinol-modified silicone oil, vinyl silicone oil, and silicone acrylate.

For example, the olefin-based wax may include one or more selected from the group consisting of oxidized polyethylene wax, polyethylene wax, and polypropylene wax.

For example, the heat stabilizer may include a phenolic heat stabilizer, a phosphorus heat stabilizer, or a mixture thereof, preferably a phenolic heat stabilizer. In this case, oxidation due to heat may be prevented during an extrusion process, and thus mechanical properties and heat resistance may be excellent.

For example, the phenolic heat stabilizer may include one or more selected from the group consisting of N,N'-hexane-1,6-diyl-bis[3-(3,5-di-t-butyl-4-hydroxyphenyl propionamide)], pentaerythritol tetrakis[3-(3,5-di-t-butyl-4-hydroxyphenyl)propionate], N,N'-hexamethylene-bis(3,5-dit-butyl-4-hydroxy-hydrocinnamamide), triethyleneglycol-bis[3-(3-t-butyl-5-methyl-4-hydroxyphenyl)propionate], 3,5-di-t-butyl-4-hydroxybenzylphosphonate-diethylester, 1,3,5-trimethyl-2,4,6-tris(3,5-di-t-butyl-4-hydroxybenzyl)benzene, and 1,3,5-tris(4-t-butyl-3-hydroxy-2,6-dimethylbenzyl)isocyanurate. In this case, heat resistance may be significantly improved while maintaining a high physical property balance.

For example, the phosphorus heat stabilizer may include one or more selected from the group consisting of triphenylphosphite, tris(nonylphenyl)phosphite, tris(2,4-di-tert-butylphenyl)phosphite, tris(2,6-di-tert-butylphenyl)phosphite, tridecylphosphite, trioctylphosphite, trioctadecylphosphite, didecylmonophenylphosphite, dioctylmonophenylpho-sphite, diisopropylmonophenylphosphite, monobutyldiphenylphosphite, monodecyldiphenylphosphite, monooctyldiphe-nylphosphite, bis(2,6-di-tert-butyl-4-methylphenyl)pentaerythritoldiphosphite, 2,2'-methylenebis(4,6-di-tert-butylphenyl) octylphosphite, bis(nonylphenyl)pentaerythritoldiphosphite, bis(2,4-di-tert-butylphenyl)pentaerythritoldiphosphite, stearylpentaerythritoldiphosphite, tributylphosphate, triethylphosphate, and trimethylphosphate.

For example, the light stabilizer may include one or more selected from the group consisting of a triazine-based compound, a benzophenone-based compound, a benzotriazole-based compound, an indole-based compound, a quinolinone-based compound, a benzoate-based compound, a cyanoacrylate-based compound, and an amine-based compound, preferably a benzotriazole-based compound or an amine-based compound. In this case, physical property balance may be excellent, and thus light resistance may be further improved.

For example, the triazine-based compound may include one or more selected from the group consisting of 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,6-diphenyl-4-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine, 2,4,6-tris(2-hydroxy-4-propoxyphenyl)-1,3,5-triazine, 2,4,6-tris(2-hydroxy-4-butoxyphenyl)-1,3,5-triazine, 2,4,6-tris(2-hydroxy-4-butoxyphenyl)-1,3,5-triazine, 2,4,6-tris(2-hydroxy-4-hexyloxyphenyl)-1,3,5-triazine, 2,4,6-tris(2-hydroxy-4-octyloxyphenyl)-1,3,5-triazine, 2,4,6-tris(2-hydroxy-4-dodecyloxyphenyl)-1,3,5-triazine, 2,4,6-tris(2-hydroxy-4-benzyloxyphenyl)-1,3,5-triazine, 2,4,6-tris(2-hydroxy-4-ethoxyethoxyphenyl)-1,3,5-triazine, 2,4,6-tris(2-hydroxy-4-butoxyethoxyphenyl)-1,3,5-triazine, 2,4,6-tris(2-hydroxy-4-propoxyethoxyphenyl)-1,3,5-triazine, 2,4,6-tris(2-hydroxy-4-methoxycarbonylpropyloxyphenyl)-1,3,5-triazine, 2,4,6-tris(2-hydroxy-4-ethoxycarbonylethyloxyphenyl)-1,3,5-triazine, 2,4,6-tris(2-hydroxy-4-(1-(2-ethoxyhexyloxy)-1-oxopropan-2-yloxy)phenyl)-1,3,5-triazine, 2,4,6-tris(2-hydroxy-3-methyl-4-ethoxyphenyl)-1,3,5-triazine, 2,4,6-tris(2-hydroxy-3-methyl-4-propoxyphenyl)-1,3,5-triazine, 2,4,6-tris(2-hydroxy-3-methyl-4-butoxyphenyl)-1,3,5-triazine, 2,4,6-tris(2-hydroxy-3-methyl-4-butoxyphenyl)-1,3,5-triazine, 2,4,6-tris(2-hydroxy-3-methyl-4-hexyloxyphenyl)-1,3,5-triazine, 2,4,6-tris(2-hydroxy-3-methyl-4-octyloxyphenyl)-1,3,5-triazine, 2,4,6-tris(2-hydroxy-3-methyl-4-dodecyloxyphenyl)-1,3,5-triazine, 2,4,6-tris(2-hydroxy-3-methyl-4-benzyloxyphenyl)-1,3,5-triazine, 2,4,6-tris(2-hydroxy-3-methyl-4-ethoxyethoxyphenyl)-1,3,5-triazine, 2,4,6-tris(2-hydroxy-3-methyl-4-butoxyethoxyphenyl)-1,3,5-triazine, 2,4,6-tris(2-hydroxy-3-methyl-4-propoxyethoxyphenyl)-1,3,5-triazine, 2,4,6-tris(2-hydroxy-3-methyl-4-methoxycarbonylpropyloxyphenyl)-1,3,5-triazine, 2,4,6-tris(2-hydroxy-3-methyl-4-ethoxycarbonylethyloxyphenyl)-1,3,5-triazine, 2,4,6-tris(2-hydroxy-3-methyl-4-(1-(2-ethoxyhexyloxy)-1-oxopropan-2-yloxy)phenyl)-1,3,5-triazine, 2,4-bis(2,4-dimethylphenyl)-6-(2-hydroxy-4-N-octyloxyphenyl)-1,3,5-triazine, and 2-(4,6-diphenyl-1,3,5-triazine-2-yl)-5-(2-(2-ethylhexanoyloxy)ethoxy)phenol.

For example, the benzophenone-based compound may include one or more selected from the group consisting of 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydratebenzophenone, 2-hydroxy-4-dodecyloxy-benzophenone, 2-hydroxy-4-octodecyloxy-benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone, 2-hydroxy-4-methoxy-2'-carboxybenzophenone and 4,4'-bis(diethylamino)benzophenone.

For example, the benzotriazole-based compound may include one or more selected from the group consisting of 2-(2'-hydroxy-5'-methylphenyl)benzotriazole, 2-2'-hydroxy-3',2-(2'-hydroxy-3'-tert-butyl-5'-methylphenyl)benzotriazole, 2-(2'-hydroxy-5'-methylphenyl)benzotriazole, 5'-bis(α,α-dimethylbenzyl)phenyl-benzotriazole, 2-(2'-hydroxy-3',5'-di-tert-butyl-phenyl)-benzotriazole, 2-(2'-hydroxy-3'-tert-butyl-5'-methylphenyl)-5-chlorobenzotriazole, 2-(2'-hydroxy-3',5'-di-tert-butyl-phenyl)-5-chlorobenzotriazole, 2-(2'-hydroxy-3',5'-di-tert-amyl)-benzotriazole, 2-(2'-hydroxy-3',5'-di-tert-amylphenyl)-5-chlorobenzotriazole, 2-(2'-hydroxy-3'-(3'',4'',5'',6''-tetrahydrophthalimidemethyl)-5'-methylphenyl)benzotriazole, 2-(2-hydroxy-3,5-di-tert-pentylphenyl)benzotriazole, 2-(2'-hydroxy-5'-tert-octylphenyl)benzotriazole, 2,2'-methylenebis [4-(1,1,3,3-tetramethylbutyl)-6-(2H-benzotriazole-2-yl)phenol], and 2-[5-chloro(2H)-benzotriazole-2-yl]-4-methyl-6-(tert-butyl)phenol, preferably 2-[5-chloro(2H)-benzotriazole-2-yl]-4-methyl-6-(tert-butyl)phenol.

For example, the indole-based compound may be 2-[(1-methyl-2-phenyl-1H-indole-3-yl)methylene] propanedinitrile.

For example, the quinolinone-based compound may be 4-hydroxy-3-[(phenylimino)methyl]-2(1H)-quinolinone.

For example, the benzoate-based compound may include one or more selected from the group consisting of 2,4-di-t-butylphenyl-3',5'-di-t-butyl-4'-hydroxybenzoate, 2,6-di-t-butylphenyl-3',5'-di-t-butyl-4'-hydroxybenzoate, n-hexadecyl-3,5-di-t-butyl-4-hydroxybenzoate, and n-octodecyl-3,5-di-t-butyl-4-hydroxybenzoate.

For example, the cyanoacrylate-based compound may be 2'-ethylhexyl-2-cyano-3,3-diphenylacrylate, ethyl-2-cyano-3-(3',4'-methylenedioxyphenyl)-acrylate, or a mixture thereof.

For example, the amine-based compound may be a hindered amine-based UV stabilizer (HALS), preferably may include one or more selected from the group consisting of 1,1-bis(2,2,6,6-tetramethyl-4-piperidyl)succinate, bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl)-N-butyl-3,5-di-tert-butyl-4-hydroxybenzylmalonate, a condensation product of 1-(2-hydroxyethyl)-2,2,6,6-tetramethyl-4-hydroxypiperidine and succinic acid, a linear or cyclic condensation product of N,N'-bis(2,2,6,6-tetramethyl-4-piperidyl)hexamethylene diamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, a linear or cyclic condensation product of N,N'-bis(2,2,6,6-tetramethyl-4-piperidyl)hexamethylene diamine and 4-morpholino-2,6-dichloro-1,3,5-triazine, a reaction product of 7,7,9,9-tetramethyl-2-cycloundecyl-1-oxa-3,8-diaza-4-oxospiro-[4,5]decane and epichlorohydrin, and poly [[6-(1,1,3,3-tetramethylbutyl)amino]-1,3,5-triazine-2,4-diyl][(2,2,6,6-tetramethyl-4-piperidinyl)imino]-1,6-hexanediyl [(2,2,6,6-tetramethyl-4-piperidinyl)imino], preferably bis(2,2,6,6-tetramethyl-4-piperidinyl)sebacate.

The pigment may be an inorganic pigment or an organic pigment.

For example, the organic pigment may include one or more selected from the group consisting of a perinone-based pigment, an anthraquinone-based pigment, a perylene-based pigment, a phthalocyanine-based pigment, an azo-based pigment, an indigo-based pigment, a dioxazine-based pigment, a quinacridone-based pigment, a methane-based pigment, a quinoline-based pigment, an isoindolinone-based pigment, and a phthalone-based pigment.

For example, the inorganic pigment may include one or more selected from the group consisting of an ultramarine-based pigment, titanium dioxide, zinc sulfide, zinc oxide, iron oxide, and carbon black.

For example, as the release agent, one or more selected from glycerin stearate and polyethylene tetrastearate may be used, without being limited thereto.

As the antistatic agent, any antistatic agent used in the technical field to which the present invention belongs may be used without any particular limitation. For example, as the antistatic agent, at least one selected from anionic surfactants such as sulfate-based, sulfonate-based, and phosphate-based, and nonionic surfactants such as quaternary ammonium salt-based and alkylamine sulfate-based may be used, but the present invention is not limited thereto.

For example, as the anti-drip agent, one or more selected from the group consisting of polytetrafluoroethylene (PTFE), a mixture (PTFE/SAN) of PTFE and a styrene-acrylonitrile (SAN) resin, a mixture (PTFE/PMMA) of PTFE and poly methyl methacrylate (PMMA), polyamide, polysilicone, and a tetrafluoroethylene-hexafluoropropylene (TFE-HFP) copolymer, preferably one or more selected from the group consisting of PTFE/SAN and PTFE/PMMA, more preferably PTFE/SAN, may be used.

The PTFE/SAN and PTFE/PMMA may preferably be a mixture of PTFE and SAN or PMMA in a weight ratio of 1:0.5 to 1.5, and as an example, a mixture in a weight ratio of 1:1.

Antibacterial agents, processing aids, metal deactivators, flame suppressors, anti-drip agents, inorganic fillers, anti-friction agents, and anti-wear agents used in the technical field of the present invention may be used in the present invention without special limitation as long as the additives follow the definition of the present invention.

Molded article

A molded article of the present invention includes the thermoplastic resin composition. In this case, impact resistance, film processability, gloss, whiteness, weather resistance, and heat resistance may be excellent. In addition, even when including a recycled resin, the deterioration of physical properties may be prevented, and thus eco-friendliness may be achieved. In addition, low-gloss characteristics may be excellent.

Even when a recycled resin is included, since the molded article has physical properties that are equivalent or higher than those of a molded article containing only a new resin, the molded article may be used without additional processing in fields to which conventional ASA-based thermoplastic resin compositions are applied, such as interior and exterior building materials, interior and exterior automobile materials, ships, and leisure and sports equipment.

For example, the molded article has excellent film processability and high whiteness, so the molded article may be manufactured into films of various colors. The molded article also has excellent weather resistance, so the molded article is particularly suitable as an exterior material. For example, the molded article may be an injection-molded article having a thickness of 1 to 5 mm, preferably 1.5 to 4 mm, more preferably 2 to 3 mm. As a specific example, when measurement is performed at degree observer of 10° under UV D65 light source using a color difference meter (model name: X-lite Color Eye 7000A) according to the CIE 1976 L*a*b* color system under conditions of 3 mm thickness, and then an L value is measured in a reflectance mode according to the CIE Lab method based on the Munsell System, the molded article may have a whiteness of 85 or more, preferably 85 to 100, more preferably 88 to 98, still more preferably 89 to 97. In this case, whiteness may be excellent, and thus vivid colors may be realized.

For example, the molded article has excellent film processability and low-gloss characteristics, and thus is useful for low-light films. As a specific example, the molded article may be an extruded film having a thickness of 40 to 600 μm, preferably 50 to 500 μm, more preferably 60 to 300 μm. In particular, the extruded film may have a gloss of less than 50, preferably 20 to 47, more preferably 22 to 45, still more preferably 23 to 42, still more preferably 25 to 40 as measured at 45° for a thickness of 0.08 mm (80 μm) according to ASTM D2457. In this case, a high-quality low-gloss film having excellent low gloss and uniform thickness may be provided.

The molded article may be manufactured by a method commonly used in the technical field to which the present invention belongs. For example, using the melt-kneaded product or pellets of the thermoplastic resin composition according to the present invention as a raw material, the molded article may be manufactured using a molding method such as injection molding, injection compression molding, extrusion molding, blow molding, press molding, compression molding, hot bending molding, calendar molding, or rotational molding. At this time, the size, thickness, shape, and the like of the molded article may be appropriately adjusted depending on the intended use.

The molded article may be preferably manufactured by injecting the melt-kneaded product or pellets of the thermoplastic resin composition according to the present invention at a barrel temperature of 180 to 300 °C using an injection machine. The manufactured molded article may be a molded article used in areas where weather resistance, gloss, molding processability and impact strength are all required.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

The materials used in the following examples and comparative examples are as follows.

(A) Graft copolymer:

(A-1) Large-diameter ASA resin: An ASA graft copolymer including 50 % by weight of a butyl acrylate rubber having an average particle diameter of 400 nm, 36 % by weight of styrene, and 14 % by weight of acrylonitrile
(A-2) Small-diameter ASA resin: An ASA graft copolymer including 50 % by weight of a butyl acrylate rubber having an average particle diameter of 100 nm, 36 % by weight of styrene, and 14 % by weight of acrylonitrile
(A-3) ABS resin: An ABS graft copolymer including 60 % by weight of a butadiene rubber having an average particle diameter of 300 nm and 8 to 12 % by weight of acrylonitrile

(B) Copolymer:

(B-1) SAN resin: A general SAN copolymer having Mw of 150,000 g/mol and including 70 % by weight of styrene and 30 % by weight of acrylonitrile
(B-2) Heat-resistant SAN resin: A heat-resistant SAN copolymer having Mw of 100,000 g/mol and including 70 % by weight of $\alpha$-methylstyrene and 30 % by weight of acrylonitrile

(C) Polyethylene terephthalate:

(C-1) Non-recycled polyethylene terephthalate: A PET resin having I.V. of 0.6~0.8 dl/g
(C-2) Recycled polyethylene terephthalate: A recycled PET resin having I.V. of 0.6~0.8 dl/g

(D) Compatibilizer:

(D-1) An ethylene methyl acrylate copolymer (EMA; Lotyl 29MA03T, SK Co.) including 71 % by weight of ethylene and 29 % by weight of methyl acrylate
(D-2) An ethylene vinyl acetate copolymer (EVA; EVEA28025, LG Chem Co.) including 72 % by weight of ethylene and 28 % by weight of vinyl acetate

Examples 1-1 to 1-7, Examples 2-1 to 2-9, Comparative Examples 1-1 to 1-11, and Comparative Examples 2-1 to 2-12

According to the contents shown in Tables 1 and 3, (A) to (D) were mixed using a super mixer and then extruded at a cylinder temperature of 230 °C and a screw rotation speed of 200 rpm using a twin-screw extruder (screw diameter: 26 mm, L/D=40) to obtain pellets.

The thermoplastic resin composition in the form of pellets was dried at 100 °C for more than 2 hours, and then injection-molded in an injection molding machine under the conditions of an injection molding machine barrel temperature of 260 °C, a mold temperature of 60 °C, and an injection speed of 30 mm/sec to manufacture specimens for measuring physical properties. The physical properties of the above specimens were measured after leaving the specimens at room temperature (23 ± 3 °C) for more than 48 hours.

In addition, when manufacturing an extruded film, using the manufactured pellets, a film with a thickness of 0.08 mm was manufactured using a T-die extruder (Techline 20T of Collins Co., screw diameter: 20 mm, L/D=25) under the conditions of a molding temperature of 250 °C, a molding pressure of 200 kgf/cm$^2$, a screw rotation speed of 100 rpm, a roll temperature of 85 °C, and a roll rotation speed of 3.5 m/min, and the gloss and torque characteristics of the manufactured film were measured.

[Test Examples]

The physical properties of the specimens manufactured in the examples and comparative examples were measured using the following methods, and the results are shown in Tables 2 and 4 below.

**[0188]** * Injection gloss (gloss unit; GU): According to ASTM D2457, gloss was measured using a gloss meter VG7000 at 45° on an injection-molded specimen with a thickness of 3 mm.

**[0189]** * Whiteness (L value): According to the CIE 1976 L*a*b* color system, measurements were performed using an injection-molded specimen with a thickness of 3 mm, using a color difference meter (model number: X-lite Color Eye 7000A) under a UV D65 light source, at a degree observer of 10°, and the L value was measured in the reflectance mode according to the method of CIE Lab according to the Munsell System.

**[0190]** * Extruded film gloss(gloss unit; GU): Gloss was measured using a gloss meter VG7000 at 45° with an extruded film specimen with a thickness of 0.08 mm according to ASTM D2457.

**[0191]** * 1/8" Izod impact strength (kgf·cm/cm): Izod impact strength was measured at room temperature using 1/8" thick injection-molded specimens according to ASTM D256.

**[0192]** * 1/4" Izod impact strength (kgf·cm/cm): Izod impact strength was measured at room temperature using 1/4" thick injection-molded specimens according to ASTM D256.

**[0193]** * Processability (%): In the process of extrusion-molding with a film having a thickness of 0.08 mm under the conditions of a molding temperature of 250 °C, a molding pressure of 200 kgf/cm$^2$, a screw rotation speed of 100 rpm, a roll temperature of 85 °C, and a roll rotation speed of 3.5 m/min using a T-die extruder (Techline 20T manufactured by Collins Co., screw diameter: 20 mm, L/D = 25), a torque value applied to the motor connected to the screw to rotate the screw at the set rotation speed was expressed as a ratio to the maximum torque value of the extruder. As the torque value decreases, the processability improves.

**[0194]** * Weather resistance (ΔE): For an injection-molded specimen having a thickness of 3 mm, weather resistance measurement was performed for 2,000 hours in an accelerated weathering tester (Weather-O-Meter, Ci4000, ATLAS Co., xenon arc lamp, Quartz (inner)/S.Boro (outer) filters, irradiance of 0.55W/m$^2$ at 340 nm) according to SAE J1960, and weather resistance was evaluated by ΔE calculated using Equation 2 below. ΔE below is an arithmetic mean of the Hunter Lab (L, a, b) values measured before and after the accelerated weathering test. Weather resistance increases as the value of ΔE approaches zero. Hunter Lab (L, a, b) values were measured using a color meter (X-lite Color-eye 7000A) according to the CIE 1976 L*a*b* color system.

[Equation 2] [343] $\Delta E = \sqrt{(L-L')^2 + (a-a')^2 + (b-b')^2}$ (√ : square root sign)    [Equation 2]

**[0195]** * Thermal stability: During the injection molding process of the specimen for evaluating physical properties, Hunter Lab (L, a, b) values were measured for specimens injected at a cylinder temperature of 260 °C of the injection molding machine with an additional residence time of 5 minutes and for specimens without an additional residence time of 5 minutes. The color values measured before and after an additional 5-minute residence time at 260 °C were substituted into Equation 3 below to calculate the ΔE value. Thermal stability increases as the ΔE value approaches zero.

[Equation 3]

$$\Delta E \text{ before and after stay} = \sqrt{(L-L')^2 + (a-a')^2 + (b-b')^2} \quad (\sqrt{} : \text{square root sign})$$

[Table 1]

| (parts by weight) Based on A+B+C 100 | | (A-1) Large-diameter ASA | (A-2) Small-diameter ASA | (A-3) ABS | (B-1) General SAN | (B-2) Heat-resistant SAN | (C-1) Non-recycled PET | (D-1) EMA | (D-2) EVA |
|---|---|---|---|---|---|---|---|---|---|
| Examples | 1-1 | 14 | 7 | - | 49 | - | 30 | 2 | - |
| | 1-2 | 5 | 35 | | 30 | - | 30 | 2 | - |
| | 1-3 | 14 | 7 | - | 49 | - | 30 | 5 | - |
| | 1-4 | 14 | 7 | - | - | 49 | 30 | 5 | - |
| | 1-5 | 14 | 7 | - | 49 | - | 30 | - | 2 |
| | 1-6 | 15 | 15 | - | 37 | - | 33 | 2 | - |
| | 1-7 | 10 | 20 | - | 45 | - | 25 | 2 | - |
| Comparative Examples | 1-1 | 14 | 7 | - | 79 | - | - | - | - |
| | 1-2 | 14 | 7 | - | 49 | - | 30 | - | - |
| | 1-3 | 14 | 7 | - | - | - | 79 | 2 | - |
| | 1-4 | 3 | 50 | - | 17 | - | 30 | 2 | - |
| | 1-5 | 5 | 3 | - | 62 | - | 30 | 2 | - |
| | 1-6 | 10 | 30 | - | 60 | - | - | 2 | - |
| | 1-7 | - | - | - | 60 | - | 40 | 2 | - |
| | 1-8 | - | - | 21 | 49 | - | 30 | 2 | - |
| | 1-9 | 5 | 7 | - | 48 | - | 40 | 2 | - |
| | 1-10 | 17 | 30 | - | 50 | - | 3 | 2 | - |
| | 1-11 | 10 | 10 | - | 30 | - | 50 | 2 | - |

[Table 2]

| Classification | | Gloss (GU) | Whiteness (L value) | Impact strength (kgf·cm/cm) | Processability (%) | Torque reduction compared to Comparative Example 1 (%) | Weather resistance (ΔE) | Thermal stability (ΔE after stay) |
|---|---|---|---|---|---|---|---|---|
| Examples | 1-1 | 110.0 | 90.0 | 9.6 | 33 | 31.3 | 1.7 | 3.1 |
| | 1-2 | 112.0 | 92.0 | 10.9 | 33 | 31.3 | 1.2 | 3.4 |
| | 1-3 | 120.0 | 91.0 | 10.5 | 31 | 35.4 | 1.6 | 3.2 |
| | 1-4 | 114.0 | 90.0 | 10.8 | 34 | 29.2 | 1.1 | 3.0 |
| | 1-5 | 112.0 | 90.0 | 9.8 | 33 | 31.3 | 1.5 | 3.3 |
| | 1-6 | 111.0 | 92.0 | 11.0 | 33 | 31.3 | 1.4 | 3.3 |
| | 1-7 | 113.0 | 90.0 | 10.8 | 34 | 29.2 | 1.3 | 3.4 |

(continued)

| Classification | | Gloss (GU) | Whiteness (L value) | Impact strength (kgf·cm /cm) | Processability (%) | Torque reduction compared to Comparative Example 1 (%) | Weather resistance (ΔE) | Thermal stability (ΔE after stay) |
|---|---|---|---|---|---|---|---|---|
| C o m parativeExamples | 1-1 | 105.0 | 86.0 | 9.5 | 48 | - | 1.8 | 3.4 |
| | 1-2 | 78.0 | 88.0 | 6.5 | 55 | -14.6 | 3.5 | 4.3 |
| | 1-3 | 82.0 | 91.0 | 4.8 | 35 | 27.1 | 4.2 | 4.5 |
| | 1-4 | 88.0 | 89.0 | 10.8 | 48 | - | 1.9 | 3.8 |
| | 1-5 | 108.0 | 88.0 | 3.8 | 33 | 31.3 | 6.5 | 5.8 |
| | 1-6 | 89.0 | 87.0 | 14.0 | 48 | - | 1.6 | 3.2 |
| | 1-7 | 100.0 | 89.0 | 2.1 | 35 | 27.1 | 8.2 | 4.8 |
| | 1-8 | 110.0 | 90.0 | 10.5 | 33 | 31.3 | 9.1 | 6.4 |
| | 1-9 | 89.0 | 89.0 | 4.3 | 32 | 33.3 | 6.8 | 5.0 |
| | 1-10 | 87.0 | 86.0 | 11.8 | 42 | 12.5 | 1.7 | 3.2 |
| | 1-11 | 85.0 | 89.0 | 3.8 | 31 | 35.4 | 6.8 | 5.0 |

[Table 3]

| (parts by weight) Based on A+B+C 100 | | (A-1) Large-diameter ASA | (A-2) Small-diameter ASA | (A-3) ABS | (B-1) Non-heat-resistant SAN | (C-2) Recycled PET | (D-1) EMA | (D-2) EVA |
|---|---|---|---|---|---|---|---|---|
| Examples | 2-1 | 14 | 7 | - | 49 | 30 | 2 | - |
| | 2-2 | 13 | 8 | - | 49 | 30 | 2 | - |
| | 2-3 | 15 | 6 | - | 49 | 30 | 2 | - |
| | 2-4 | 24 | 16 | - | 30 | 30 | 2 | - |
| | 2-5 | 14 | 7 | - | 49 | 30 | 8 | - |
| | 2-6 | 14 | 7 | - | 49 | 30 | 4 | - |
| | 2-7 | 14 | 7 | - | 49 | 30 | - | 2 |
| | 2-8 | 17 | 15 | - | 35 | 33 | 2 | - |
| | 2-9 | 17 | 12 | - | 46 | 25 | 2 | - |

(continued)

| (parts by weight) Based on A+B+C 100 | | (A-1) Large-diameter ASA | (A-2) Small-diameter ASA | (A-3) ABS | (B-1) Non-heat-resistant SAN | (C-2) Recycled PET | (D-1) EMA | (D-2) EVA |
|---|---|---|---|---|---|---|---|---|
| Comparative Examples | 2-1 | 14 | 7 | - | 79 | - | - | - |
| | 2-2 | 14 | 7 | - | 49 | 30 | - | - |
| | 2-3 | - | 10 | - | 60 | 30 | 2 | - |
| | 2-4 | 10 | - | - | 60 | 30 | 2 | - |
| | 2-5 | 34 | 27 | - | 9 | 30 | 2 | - |
| | 2-6 | 14 | 7 | - | 49 | 30 | 12 | - |
| | 2-7 | 14 | 7 | - | 27 | 52 | 2 | - |
| | 2-8 | 30 | 17 | - | 53 | - | 2 | - |
| | 2-9 | - | - | - | 65 | 35 | 2 | - |
| | 2-10 | - | - | 21 | 49 | 30 | 2 | - |
| | 2-11 | 7 | 5 | - | 48 | 40 | 2 | - |
| | 2-12 | 30 | 20 | - | 47 | 3 | 2 | - |

[Table 4]

| Classification | | Film gloss (GU) | Impact strength (kgf·cm/cm) | Processability (%) | Torque reduction compared to Comparative Example 1 (%) | Weather resistance (ΔE) | Thermal stability (ΔE after stay) |
|---|---|---|---|---|---|---|---|
| Examples | 2-1 | 30.9 | 10.1 | 33 | 31.3 | 1.8 | 3.4 |
| | 2-2 | 31.0 | 9.8 | 31 | 35.4 | 2.0 | 3.3 |
| | 2-3 | 30.7 | 10.2 | 35 | 27.1 | 1.7 | 3.6 |
| | 2-4 | 34.0 | 12.1 | 34 | 29.2 | 1.6 | 3.8 |
| | 2-5 | 37.0 | 10.8 | 32 | 33.3 | 1.9 | 3.5 |
| | 2-6 | 31.2 | 10.3 | 32 | 33.3 | 1.9 | 3.4 |
| | 2-7 | 33.2 | 10.0 | 35 | 27.1 | 1.8 | 3.5 |
| | 2-8 | 30.8 | 11.3 | 33 | 31.3 | 1.7 | 3.8 |
| | 2-9 | 30.7 | 10.9 | 31 | 35.4 | 1.7 | 3.6 |

(continued)

| Classification | | Film gloss (GU) | Impact strength (kgf·cm/ cm) | Processability (%) | Torque reduction compared to Comparative Example 1 (%) | Weather resistance (ΔE) | Thermal stability (ΔE after stay) |
|---|---|---|---|---|---|---|---|
| Comparative Examples | 2-1 | 78.3 | 8.0 | 48 | - | 1.8 | 3.4 |
| | 2-2 | 72.1 | 7.9 | 55 | -14.6 | 2.1 | 4.1 |
| | 2-3 | 70.4 | 3.7 | 38 | 20.8 | 2.5 | 3.8 |
| | 2-4 | 68.8 | 4.5 | 39 | 18.8 | 2.8 | 3.9 |
| | 2-5 | 58.7 | 6.0 | 52 | -8.3 | 2.0 | 4.5 |
| | 2-6 | 60.1 | 8.3 | 49 | -2.1 | 2.4 | 3.9 |
| | 2-7 | 55.7 | 3.0 | 38 | 20.8 | 2.7 | 4.2 |
| | 2-8 | 80.3 | 12.6 | 50 | -4.2 | 1.9 | 4.3 |
| | 2-9 | 65.2 | 2.1 | 36 | 25.0 | 9.1 | 6.5 |
| | 2-10 | 41.3 | 13.5 | 37 | 22.9 | 9.5 | 8.3 |
| | 2-11 | 50.6 | 4.2 | 31 | 35.4 | 6.8 | 5.0 |
| | 2-12 | 76.8 | 12.0 | 43 | 10.4 | 2.0 | 6.2 |

As shown in Tables 1 and 2, in the case of Examples 1-1 to 1-7 according to the present invention, when a non-recycled PET was applied as the polyalkylene terephthalate (C), the injection gloss was 110 or more, indicating that gloss was excellent. The whiteness L value was 90.0 or more, indicating that whiteness was excellent. Impact strength was 9.6 kgf·cm/cm or more, indicating that impact resistance was excellent. In addition, compared to Comparative Example 1-1, where PET and a compatibilizer were not added to the ASA/SAN alloy resin, the torque value was reduced by at least 29.2 %, indicating that film processability was greatly improved. Furthermore, the ΔE value before and after the accelerated weather resistance test was less than 1.7, and the ΔE value before and after the additional residence time of 5 minutes at 260 °C was less than 3.4, indicating that weather resistance and thermal stability were excellent.

On the other hand, in the case of Comparative Examples 1-1 to 1-11, which were outside the range of the present invention, gloss was found to be significantly degraded in all cases except Comparative Example 1-8. Comparative Example 1-8 showed very poor weather resistance and thermal stability, and showed very poor impact resistance, processability (torque), whiteness, weather resistance, and/or thermal stability. Based these results, it can be confirmed that the thermoplastic resin composition of the present invention has excellent mechanical properties, film processability, gloss, whiteness, weather resistance, and thermal stability.

In addition, as shown in Tables 3 and 4, in the case of Examples 2-1 to 2-9 according to the present invention, when a recycled PET is applied as the polyalkylene terephthalate (C), the gloss of the extruded film was 37 or less, exhibiting low gloss. The impact strength was 9.8 kgf·cm/cm or more, indicating that impact resistance was excellent. In addition, compared to Comparative Example 2-1, where recycled PET and a compatibilizer were not added to the ASA/SAN alloy resin, the torque value was reduced by at least 27.1 %, indicating that film processability was greatly improved. Furthermore, the ΔE value before and after the accelerated weather resistance test was 2.0 or less, and the ΔE value before and after the additional residence time of 5 minutes at 260 °C was 3.8 or less, indicating that weather resistance and thermal stability were excellent.

On the other hand, in Comparative Examples 2-1 to 2-12, which were outside the range of the present invention, the gloss was all excessively increased, and the impact resistance, processability (torque), weather resistance, and/or thermal stability were very poor. In particular, in the case of Comparative Example 2-8, it was confirmed that the processability and thermal stability were lower and the low-gloss characteristics were very poor compared to Examples even though not including recycled PET.

Therefore, in the thermoplastic resin composition of the present invention, the intrinsic mechanical properties of an ASA-based resin and polyester resin are maintained at a certain level or higher, and film processability, weather resistance, thermal stability, mechanical rigidity (impact resistance), and molding processability are excellent. Accordingly, the thermoplastic resin composition may provide a high-quality molded article. In particular, when a recycled resin (recycled PET) is not included, physical properties suitable for providing high-gloss injection-molded articles with excellent injection gloss and whiteness and various colors may be realized. In addition, even when a recycled resin (recycled PET) is included, the deterioration of physical properties may be prevented, and eco-friendliness may be achieved. In addition, excellent low-gloss characteristics may be achieved, so physical properties suitable for providing an eco-friendly, low-gloss extruded film may be realized.

**Claims**

1.  A thermoplastic resin composition, comprising:

    100 parts by weight of a base resin comprising 15 to 50 % by weight of an alkyl acrylate-aromatic vinyl compound-vinyl cyanide compound graft copolymer (A); 20 to 55 % by weight of an aromatic vinyl compound-vinyl cyanide compound copolymer (B); and 10 to 40 % by weight of a recycled or non-recycled polyalkylene terephthalate (C), and
    0.5 to 10 parts by weight of a compatibilizer (D).

2.  The thermoplastic resin composition according to claim 1, wherein the compatibilizer (D) comprises one or more selected from the group consisting of an ethylene-methyl acrylate copolymer (EMA), an ethylene-butyl acrylate copolymer (EBA), an ethylene-vinyl acetate copolymer (EVA), an ethylene-methyl acrylate-glycidyl methacrylate copolymer (EMA-GMA), and an ethylene-butyl acrylate-glycidyl methacrylate copolymer (EBA-GMA).

3.  The thermoplastic resin composition according to claim 1, wherein, based on 100 % by weight of the base resin, the copolymer (A) comprises 3 to 35 % by weight of an alkyl acrylate-aromatic vinyl compound-vinyl cyanide compound graft copolymer (A-1) containing an alkyl acrylate rubber having an average particle diameter of 250 to 500 nm, and 5 to 40 % by weight of an alkyl acrylate-aromatic vinyl compound-vinyl cyanide compound graft copolymer (A-2) containing an alkyl acrylate rubber having an average particle diameter of 50 to 150 nm.

4.  The thermoplastic resin composition according to claim 3, wherein each of the graft copolymer (A-1) and the graft copolymer (A-2) comprises 40 to 60 % by weight of an alkyl acrylate rubber, 30 to 40 % by weight of an aromatic vinyl compound, and 10 to 20 % by weight of a vinyl cyanide compound.

5.  The thermoplastic resin composition according to claim 1, wherein the copolymer (B) comprises one or more selected from the group consisting of an aromatic vinyl compound-vinyl cyanide compound copolymer (B-1) comprising 55 to 85 % by weight of an alkyl non-substituted aromatic vinyl compound and 15 to 45 % by weight of a vinyl cyanide compound, and a heat-resistant aromatic vinyl compound-vinyl cyanide compound copolymer (B-2) comprising 60 to 80 % by weight of an alkyl-substituted aromatic vinyl compound, 20 to 40 % by weight of a vinyl cyanide compound, and 0 to 20 % by weight of an alkyl non-substituted aromatic vinyl compound.

6.  The thermoplastic resin composition according to claim 5, wherein the aromatic vinyl compound-vinyl cyanide compound copolymer (B-1) has a weight average molecular weight of 50,000 to 300,000 g/mol.

7.  The thermoplastic resin composition according to claim 5, wherein the heat-resistant aromatic vinyl compound-vinyl cyanide compound copolymer (B-2) has a weight average molecular weight of 30,000 to 200,000 g/mol.

8.  The thermoplastic resin composition according to claim 1, wherein the polyalkylene terephthalate (C) has an intrinsic viscosity (I.V.) of 0.5 to 1.5 dl/g.

9.  The thermoplastic resin composition according to claim 1, wherein the non-recycled or recycled polyalkylene terephthalate (C) is non-recycled polyethylene terephthalate or recycled polyethylene terephthalate.

10. The thermoplastic resin composition according to claim 1, wherein a weight ratio (A:C) of the copolymer (A) to the polyalkylene terephthalate (C) is 0.5 to 2.0 : 1.

11. The thermoplastic resin composition according to claim 2, wherein the compatibilizer (D) comprises 50 to 90 % by weight of ethylene and 10 to 50 % by weight of methyl acrylate or vinyl acetate.

12. The thermoplastic resin composition according to claim 1, wherein the polyalkylene terephthalate (C) is non-recycled polyethylene terephthalate, and the thermoplastic resin composition has an injection gloss of 108 or more as measured at 45° for an injection-molded specimen having a thickness of 3 mm according to ASTM D2457.

13. The thermoplastic resin composition according to claim 1, wherein the polyalkylene terephthalate (C) is recycled polyethylene terephthalate, and the thermoplastic resin composition has a gloss of less than 50 as measured at 45° for an extruded film specimen having a thickness of 0.08 mm according to ASTM D2457.

14. A method of preparing a thermoplastic resin composition, comprising kneading and extruding, at 170 to 300 °C and 100 to 400 rpm, 100 parts by weight of a base resin comprising 15 to 50 % by weight of an alkyl acrylate-aromatic vinyl compound-vinyl cyanide compound graft copolymer (A), 20 to 55 % by weight of an aromatic vinyl compound-vinyl cyanide compound copolymer (B), and 10 to 40 % by weight of a recycled or non-recycled polyalkylene terephthalate (C), and 0.5 to 10 parts by weight of a compatibilizer (D).

15. A molded article, comprising the thermoplastic resin composition according to any one of claims 1 to 13.

## INTERNATIONAL SEARCH REPORT

| International application No. |
| --- |
| **PCT/KR2024/014947** |

### A. CLASSIFICATION OF SUBJECT MATTER

**C08L 25/12**(2006.01)i; **C08L 51/04**(2006.01)i; **C08L 67/02**(2006.01)i; **C08L 23/08**(2006.01)i

According to International Patent Classification (IPC) or to both national classification and IPC

### B. FIELDS SEARCHED

Minimum documentation searched (classification system followed by classification symbols)

C08L 25/12(2006.01); C08K 5/1515(2006.01); C08L 27/06(2006.01); C08L 51/00(2006.01); C08L 51/04(2006.01); C08L 55/02(2006.01); C08L 67/00(2006.01); C08L 67/02(2006.01); G02F 1/1335(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열가소성(thermoplastic), 아크릴레이트(acrylate), 비닐(vinyl), 시안화비닐(vinyl cyanide), 공중합체(copolymer)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-0570430 B1 (LG CHEM, LTD.) 11 April 2006 (2006-04-11)<br>See claims 1-10; and paragraphs [0002]-[0097]. | 1-15 |
| Y | KR 10-1469263 B1 (CHEIL INDUSTRIES INC.) 05 December 2014 (2014-12-05)<br>See claim 1; and paragraphs [0032]-[0091]. | 1-15 |
| A | KR 10-1533136 B1 (LG CHEM, LTD.) 01 July 2015 (2015-07-01)<br>See abstract; and claim 1. | 1-15 |
| A | KR 10-2016-0085759 A (NITTO DENKO CORPORATION) 18 July 2016 (2016-07-18)<br>See claims 1-2. | 1-15 |
| A | KR 10-2023-0033886 A (LG CHEM, LTD.) 09 March 2023 (2023-03-09)<br>See claims 1-5. | 1-15 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **16 January 2025** | **16 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/014947**

| Patent document cited in search report | | | Publication date (day/month/year) | Patent family member(s) | | | Publication date (day/month/year) |
|---|---|---|---|---|---|---|---|
| KR | 10-0570430 | B1 | 11 April 2006 | KR 10-2005-0050808 | | A | 01 June 2005 |
| KR | 10-1469263 | B1 | 05 December 2014 | CN | 104169361 | A | 26 November 2014 |
| | | | | CN | 104169361 | B | 12 October 2016 |
| | | | | KR 10-2013-0073002 | | A | 02 July 2013 |
| | | | | US | 2014-0322487 | A1 | 30 October 2014 |
| | | | | US | 9732214 | B2 | 15 August 2017 |
| | | | | WO | 2013-094850 | A1 | 27 June 2013 |
| KR | 10-1533136 | B1 | 01 July 2015 | KR 10-2013-0067516 | | A | 25 June 2013 |
| KR | 10-2016-0085759 | A | 18 July 2016 | CN | 105722936 | A | 29 June 2016 |
| | | | | JP | 2015-096579 | A | 21 May 2015 |
| | | | | JP | 6251548 | B2 | 20 December 2017 |
| | | | | KR | 10-2328210 | B1 | 17 November 2021 |
| | | | | US | 2016-0289516 | A1 | 06 October 2016 |
| | | | | WO | 2015-072168 | A1 | 21 May 2015 |
| KR | 10-2023-0033886 | A | 09 March 2023 | CN | 116096813 | A | 09 May 2023 |
| | | | | EP | 4180487 | A1 | 17 May 2023 |
| | | | | US | 2024-0240013 | A1 | 18 July 2024 |
| | | | | WO | 2023-033404 | A1 | 09 March 2023 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230133757
- KR 1020230133758
- KR 1020240133295
- KR 1020240133298
- KR 1020090038507 A